(19) Europäisches Patentamt / European Patent Office / Office européen des brevets

(11) **EP 4 395 324 A1**

(12) **EUROPEAN PATENT APPLICATION**

(43) Date of publication:
**03.07.2024   Bulletin 2024/27**

(21) Application number: **22307053.3**

(22) Date of filing: **28.12.2022**

(51) International Patent Classification (IPC):
**H04N 19/70** *(2014.01)*

(52) Cooperative Patent Classification (CPC):
**H04N 19/70;** H04N 19/82

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventors:
• **BLESTEL, Médéric**
  **35170 Bruz (FR)**
• **LE LEANNEC, Fabrice**
  **35830 Betton (FR)**
• **ANDRIVON, Pierre**
  **35340 Liffré (FR)**
• **RADOSAVLJEVIC, Milos**
  **35000 Rennes (FR)**

(74) Representative: **RVDB Rennes**
  **44 rue Lariboisière**
  **35235 Thorigné-Fouillard (FR)**

(54) **SIGNALING CODED BLOCKS DATA AND IN-LOOP FILTERING PARAMETERS OF A VIDEO SEQUENCE**

(57)     The present application relates to signaling in a bitstream coded block data and in-loop filtering parameters of a video sequence comprising video pictures, each video picture being split into multiple coding tree units, denoted CTU, each CTU comprising CTU blocks, CTU coded blocks data being obtained for each CTU by encoding blocks of said CTU, reconstructed CTU blocks associated with a CTU being obtained by decoding CTU coded blocks data associated with said CTU, reconstructed CTU blocks associated with a CTU being filtered using in-loop filtering parameters associated with said CTU, denoted CTU in-loop filtering parameters, wherein the CTU coded blocks data associated with a CTU is signaled in the bitstream before the CTU in-loop filtering parameters associated with said CTU.

| coding_tree_unit( ) { | Descriptor |
|---|---|
| xCtb = CtbAddrX << CtbLog2SizeY | |
| yCtb = CtbAddrY << CtbLog2SizeY | |
| if( sh_slice_type == I && sps_qtbtt_dual_tree_intra_flag ) | CTU parameters syntax |
| dual_tree_implicit_qt_split( xCtb, yCtb, CtbSizeY, 0 ) | |
| else | |
| coding_tree( xCtb, yCtb, CtbSizeY, CtbSizeY, 1, 1, 0, 0, 0, 0, SINGLE_TREE, MODE_TYPE_ALL ) | |
| if( sh_sao_luma_used_flag \|\| sh_sao_chroma_used_flag ) | In-loop filter parameters syntax |
| sao( CtbAddrX, CtbAddrY ) | |
| if( sh_alf_enabled_flag ){ | |
| alf( CtbAddrX, CtbAddrY, Y) | |
| if( sh_alf_cb_enabled_flag ) { | |
| alf_ctb( CtbAddrX, CtbAddrY, Cb ) | |
| } | |
| if( sh_alf_cr_enabled_flag ) { | |
| alf_ctb( CtbAddrX, CtbAddrY, Cr ) | |
| } | |
| } | |
| alf_ctb_cc( CtbAddrX, CtbAddrY, Cr ) | |
| } | |

**Fig. 14**

EP 4 395 324 A1

**Description**

FIELD

The present application generally relates to video sequence encoding and decoding. Particularly, but not exclusively, the technical field of the present application is related to signaling coded blocks data and parameters used for coding/decoding/reconstructing/filtering a video sequence.

BACKGROUND

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

A pixel corresponds to the smallest display unit on a screen, which can be composed of one or more sources of light (1 for monochrome screen or 3 or more for colour screens).

A video sequence comprises consecutive video pictures having temporal relationships between them.

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R, G,B) format.

Each component of a video picture may comprise a number of samples relative to a number of pixels of a screen on which the video picture is intended to be display. In variants, the number of samples comprises in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format. A luma sample is a luma value and a chroma sample is a chroma or a colour value.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample, in short a luma block, or a block of at least one chroma sample, in short a chroma block, may be considered when the picture/video format is the well-known (Y,Cb,Cr) format, or a block of at least one color sample when the picture/video format is the well-known (R, G, B) format.

The at least one exemplary embodiment is not limited to a particular picture/video format.

In the state-of-the-art video compression systems such as HEVC (ISO/IEC 23008-2 High Efficiency Video Coding, ITU-T Recommendation H.265, https://www.itu.int/rec/T-REC-H.265-202108-P/en) or VVC (Rec. ITU-T H.266 | ISO/IEC 23090-3, "Versatile Video Coding", 2020), low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left boundaries spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH**). For example, the default CTU size (default CTU height, default CTU width) may equal to 128 (**CTU DW=CTU DH**=128). A default CTU size (height, width) is encoded into the bitstream, for example at a sequence level in a Sequence Parameter Set (SPS).

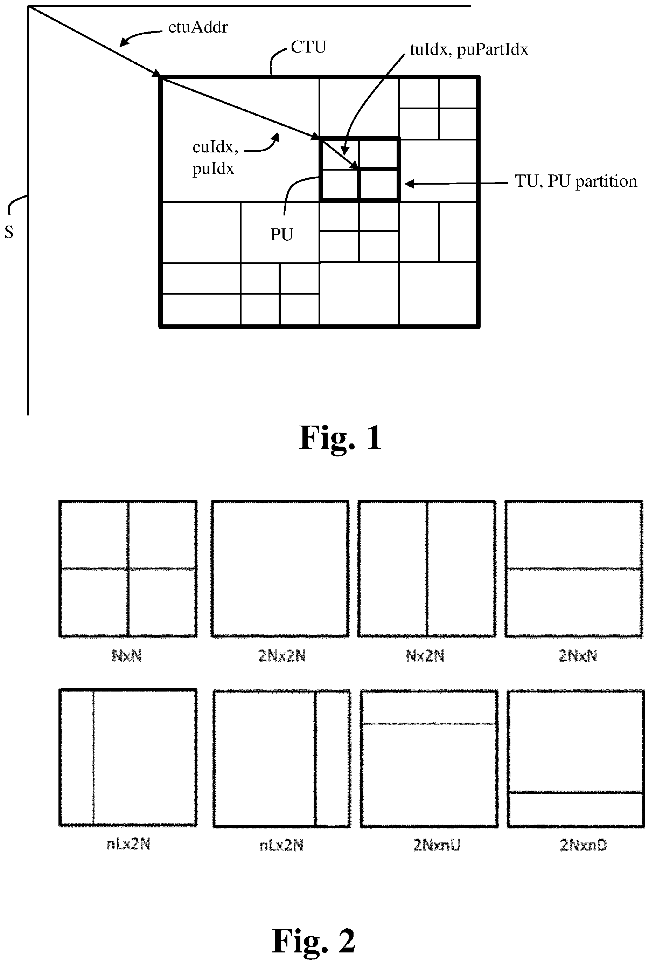

The spatial position of a CTU in a CTU grid is determined from a CTU address **ctuAddr** defining a spatial position of the top-left corner of a CTU from an origin. As illustrated on **Figure 1,** the CTU address may define the spatial position from the top-left corner of a higher-level spatial structure S containing the CTU.

A coding tree is associated with each CTU to determine a tree-division of the CTU.

As illustrated on **Figure 1,** in HEVC, the coding tree is a quad-tree division of a CTU, where each leaf is called a Coding Unit (CU). The spatial position of a CU in the video picture is defined by a CU index **culdx** indicating a spatial position from the top-left corner of the CTU. A CU is spatially partitioned into one or more Prediction Units (PU). The spatial position of a PU in the video picture VP is defined by a PU index **puldx** defining a spatial position from the top-left corner of the CTU and the spatial position of an element of a partitioned PU is defined by a PU partition index **puPartIdx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuldx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure 2.** They include square partitions (2Nx2N and NxN), which are the only ones used in both Intra and Inter prediction CUs, symmetric non-square partitions (2NxN, Nx2N, used only in Inter prediction CUs), and asymmetric Partitions (used only in Inter prediction CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

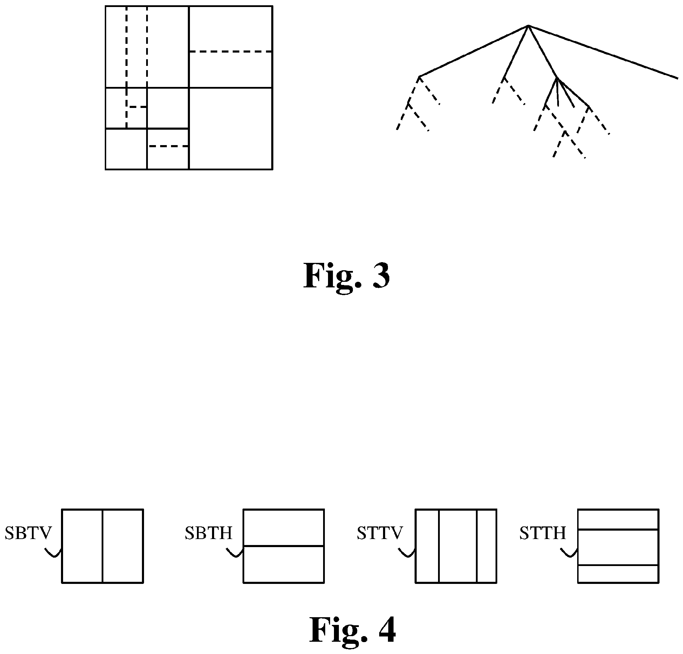

As illustrated on **Figure 3,** in VVC, the coding tree starts from a root node, i.e., the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4.** These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

In intra predicted picture, separated coding trees may be used, for luma component on one side and chroma components on the other side. The luma component part of a CTU is called a luma coding tree block. A luma coding tree block (luma CTB) is then associated to a coding tree, which leaves are associated to luma coding blocks. Furthermore, in the case of separated luma/chroma coding trees and a 3 components picture, the two chroma CTB share the same coding tree.

Contrary to HEVC, in VVC, in most cases, CU, PU and TU have equal size, which means coding units are generally not partitioned into PU or TU, except in some specific coding modes.

In VVC, a high-level picture partitioning is also provided in which, basically, a video picture may be partitioned into sub-pictures, slices, and tiles.

A tile is a sequence of CTUs that covers a rectangular picture area of a video picture. The CTUs in a tile are usually scanned in raster scan order within that tile. The tile size (width and height) is an integer multiple of the default CTU size (default CTU width and default CTU height).

A slice comprises an integer number of tiles or an integer number of consecutive complete CTU rows within a tile. Consequently, each vertical slice boundary is always also a vertical tile boundary. It is possible that a horizontal boundary of a slice is not a tile boundary but consists of horizontal CTU boundaries within a tile; this occurs when a tile is split into multiple rectangular slices, each of which consists of an integer number of consecutive complete CTU rows within the tile. The slice size (width and height) is an integer multiple of the default CTU size (default CTU width and default CTU height).

Two modes of slices are supported, namely the raster-scan slice mode and the rectangular slice mode. In the raster-scan slice mode, a slice contains a sequence of complete tiles in a tile raster scan order of a video picture. In the rectangular slice mode, a slice contains either a number of complete tiles that collectively form a rectangular picture area or several consecutive complete CTU rows of one tile that collectively form a rectangular picture area. Tiles within a rectangular slice are scanned in tile raster scan order within the rectangular picture area corresponding to that slice.

A sub-picture contains one or more slices that collectively cover a rectangular picture area. Consequently, each sub-picture boundary is also always a slice boundary, and each vertical sub-picture boundary is always also a vertical tile boundary. The sub-picture size (width and height) is an integer multiple of the default CTU size (default CTU width and default CTU height).

One or both of the following conditions shall be fulfilled for each sub-picture and tile:

- All CTUs in a sub-picture belong to the same tile.

- All CTUs in a tile belong to the same sub-picture.

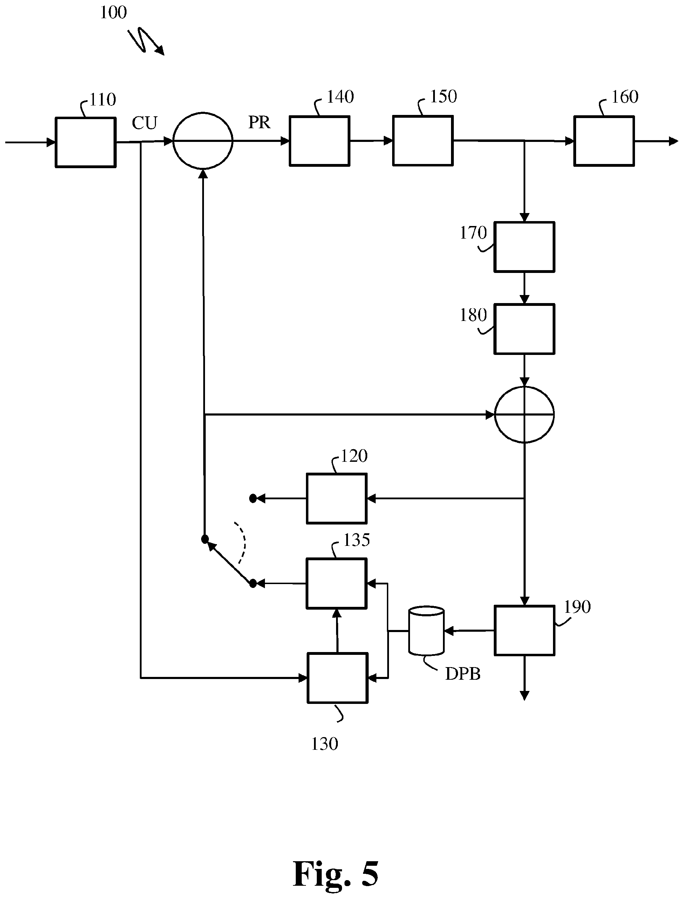

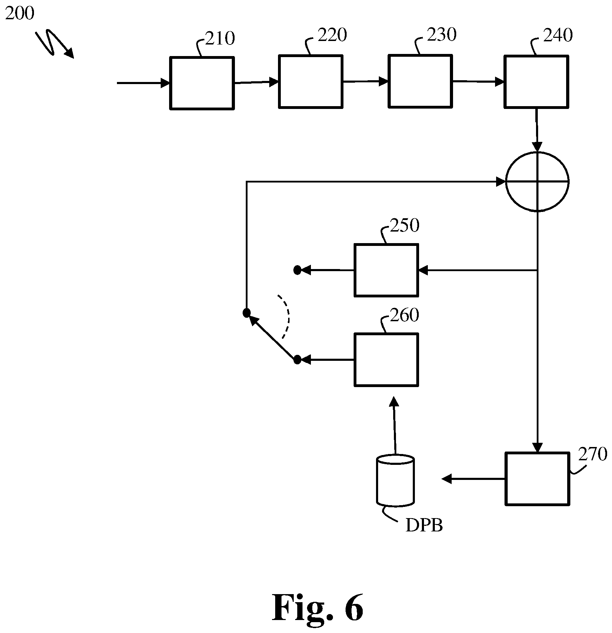

**Figures 5** and **6** provide an overview of video encoding/decoding methods used in current video standard compression systems like HEVC or VVC for example.

**Figure 5** shows a schematic block diagram of steps of a method 100 of encoding a video picture VP of a video sequence in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a video picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each block is encoded along an encoding loop also called "in loop" using either an intra or inter prediction mode.

Intra prediction (step 120) used intra prediction data. Intra prediction consists in predicting a current block by means of an intra-prediction block based on already encoded, decoded and reconstructed samples located around the current block, typically on the top and on the left of the current block. Intra prediction is performed in the spatial domain.

In inter-prediction mode, motion estimation (step 130) and motion compensation (135) are performed. Motion estimation searches, in one or more reference picture(s) used to predictively encode the current video picture, a reference block that is a good predictor of the current block. In uni-directional motion estimation/compensation, a candidate reference block belongs to a single reference picture of a reference picture list denoted L0 or L1, and in bidirectional motion estimation/compensation, the candidate reference block is derived from a reference block of the reference picture list L0 and a reference block of the reference picture list L1.

For instance, a good predictor of the current block is a candidate reference block which is similar to the current block. It may also correspond to a reference block that provides a good trade-off between its similarity to current block, and the rate cost of motion information needed to indicate its use for the temporal prediction of current block.

The output of the motion estimation step 130 is inter-prediction data comprising motion information associated to the current block and other information used for obtaining a same prediction block at the encoding/decoding side. Typically motion information comprises one motion vector and a reference picture index for uni-directional estimation/compensation and two motion vectors and two reference picture indices for bi-direction estimation/compensation). Next, motion compensation (step 135) obtains a prediction block by means of the motion vector(s) and reference picture index (indices) determined by the motion estimation step 130. Basically, the reference block belonging to a selected reference picture and pointed to by a motion vector may be used as the prediction block of the current block. Furthermore, since motion vectors are expressed in fractions of integer pixel positions (which is known as sub-pel accuracy motion vector representation), motion compensation generally involves a spatial interpolation of some reconstructed samples of the reference picture to compute the prediction block.

Prediction information data is signaled into the bitstream. The prediction information may comprise prediction mode (intra or inter or skip), intra/inter prediction data and any other information used for obtaining a same prediction block at the decoding side.

The method 100 selects one prediction mode (the intra or inter prediction mode) by optimizing a rate-distortion trade-off taking into account the encoding of a prediction residual block calculated, for example, by subtracting a candidate prediction block from the current block, and the signaling of prediction information data required for determining said candidate prediction block at the decoding side.

Usually, the best prediction mode is given as being the prediction mode of a best coding mode p* for a current block given by:

$$p^* = \underset{p \in P}{\mathrm{Argmin}}\{RD_{cost}(p)\}$$

where $P$ is the set of all candidate coding modes for the current block, $p$ represents a candidate coding mode in that set, $RD_{cost}(p)$ is a rate-distortion cost of candidate coding mode $p$, typically expressed as:

$$RD_{cost(p)} = D(p) + \lambda.R(p)$$

$D(p)$ is the distortion between the current block and a reconstructed block obtained after encoding/decoding the current block with the candidate coding mode $p$, $R(p)$ is a rate cost associated with the coding of the current block with coding mode $p$, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best prediction block from the current block. The prediction residual block PR is then transformed (step 140) by using, for example, a DCT (discrete cosine transform) or DST (Discrete Sinus transform) type transform, or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170), and inverse transformed (180) (or not) as part of the encoding loop, leading to a decoded prediction residual block. The decoded prediction residual block and the prediction block are then combined, typically summed, which provides the reconstructed block.

CTU coded blocks data represents all coding tree (CT) data and parameters used to encode/decode/reconstruct blocks of all CTUs of a video picture of a video sequence. CTU coded blocks data is signaled in a bitstream according to a coding tree syntax, i.e., a set of syntax elements carrying CTU coded blocks data. CTU coded blocks data comprises parameters for defining a coding tree (partitioning information data), entropy coding quantized transform coefficient blocks (or quantized prediction residual blocks) comprised in a CTU, prediction information data relative to blocks of the CTU and other information data used for encoding/decoding/reconstructing samples of blocks of the CTU.

The reconstructed blocks or the filtered reconstructed blocks of all CTUs of a video picture form a reference picture that may be stored into a decoded picture buffer (DPB) so that it can be used as a reference picture for the encoding of a next current block of a CTU of the video picture VP, or of a next video picture to encode.

In step 190, filters may be applied to a reconstructed picture, i.e., a video picture comprising reconstructed blocks of each CTU of the video picture.

These filters aim at improving the picture quality by removing compression artifacts (like blocking discontinuities, and quantization noise). In VVC, various filters exist like luma mapping with chroma scaling (LMCS), deblocking filter (DBF), sample adaptive offset (SAO), adaptive loop filter (ALF), and cross-component adaptive loop filter (CC-ALF).

These filters are qualified as "in-loop" filters as they are applied inside the encoding and the decoding loop, i.e., before storing the filtered reconstructed video pictures as reference pictures in DPB. In-loop filters may be parametrized from CTU in-loop filtering parameters to indicate that in-loop filters are parametrized at the CTU level. If used during the encoding, these filters shall be applied at the decoding to ensure the good decoding process, i.e., which reconstructs the video pictures the same way as on the encoder side.

LMCS does not specifically address the coding artifacts reduction but aims at better using the signal range for improved coding efficiency by applying two strategies:

- Reallocating the luma code values of the input video signal from the original sample domain to a mapped sample domain. For instance, the signal of a video clip that may use only a narrow range of luma code will be mapped to a proper sample domain to improve the whole compression process.

- The chroma residue scaling is designed to compensate for the luma mapping on the bit cost repartition between the luma and chroma signal.

LMCS parameters are carried in a dedicated Adaptation Parameter Set (LMCS APSs).

Hence, when multiple slices in the same or different video pictures use the same LMCS parameters, the redundant transmission of LMCS parameters can be avoided. When LMCS is applied to a video picture or a slice, only indices of the referenced LMCS APSs are signaled in the picture or slice header.

LMCS data contains two different parts:

- the syntax related to a piecewise linear model of up to 16 pieces to map luma code to a more appropriate sample domain and inversely.

- a Chroma Scaling offset value.

The flexible adjustment between luma and chroma signal can be achieved by enabling or disabling chroma scaling at the sequence or picture level or further adjusting chroma scaling by applying a chroma scaling offset (LMCS on/off flag).

LMCS on/off flag and LMCS data are CTU in-loop filtering parameters that are signaled in a bitstream before signaling CTU coded blocks data. LMCS on/off flags may be signaled at the CTU level to enable or disable this filter, or to signal the LMCS data.

In the VVC standard, DBF is applied after the LMCS. It aims at reducing the discontinuities that can appear at the transform and block boundaries, referred to blocking artifacts. When applied, it will smooth transition across the block boundaries while avoiding removal of natural edges.

The VVC deblocking filter, based on the HEVC design, has been enhanced to support larger block sizes, to reduce specific visible artifacts, and also benefits from more flexibility and supports a new control mode based on average local luma samples level.

Contrary to other filters, DBF does not need signaling at the CTU level. All DBF parameters (filter length and strength) are derived from CU mode, quantization parameter, motion vectors difference, and spatial activity.

In VVC, the chroma and luma deblocking can be performed independently on block units of $8 \times 8$ and $16 \times 16$ samples, respectively. Consequently, SAO aims at reducing artifacts resulting from the transform coefficients quantization which can arise inside the blocks. It will attenuate the ringing artifacts and correct the local average intensity changes.

VVC SAO is similar to that HEVC and consists in reducing sample distortion by first classifying reconstructed samples into different categories. For each category, an offset is computed and then added to each sample of the category. Each offset is properly calculated at the encoder and explicitly signaled to the decoder for reducing sample distortion. However, the classification of each sample is performed at both the encoder and the decoder for saving side information significantly. To achieve low latency of only one CTU, a CTU-based syntax design is specified to adapt SAO parameters for each CTU. SAO can be also controlled at the sequence and picture levels.

First, SAO on/off flags are signaled in the bitstream at sequence, slice, and CTU levels. Second, at the CTU level, SAO parameters (band or edge offset, and class) are signaled if SAO is enabled at that level.

SAO on/off flags and SAO parameters are CTU in-loop filtering parameters that are signaled in a bitstream before signaling CTU coded blocks data.

In VVC, ALF and CC-ALF perform a final corrective step that typically targets improving the signal fidelity and thus are placed at the last in-loop filtering step 190. It applies to reduce the mean square error (MSE) between the original and the reconstructed samples using Wiener-based filtering.

For each non-overlapping 4x4 block, ALF applies a sample gradients-based classification and filters the block according to the classification.

CC-ALF exploits the correlation between the luma and chroma samples and applies only to the chroma samples. CC-ALF generates a correction of chroma samples using a linearly filtered version of the luma samples located around the same relative location as the chroma samples.

In addition to the luma $4 \times 4$ block-level filter adaptation, ALF supports CTB-level filter adaptation. A luma CTB can use a filter set calculated for the current slice or one of the filter sets calculated for already coded slices.

First, ALF on/off flags are signaled at sequence, picture, slice, and CTU levels. Second, ALF parameters (filter usage information and an index indicating which ALF filter is used) are signaled in the bitstream: the filter usage information is signaled at picture, slice, and CTU level, if ALF is enabled at that level and the index is signaled in the bitstream at the CTU level.

ALF parameters may be carried in a coded syntax container called Adaptation Parameter Set (APS). APS aims at conveying slice-level information that may be shared by multiple slices (attached either to one or several video pictures). An APS may contain some ALF parameter, which, in that case, are taken into account by the decoding to perform Adaptive Loop Filtering operation. The Adaptation Parameter Set (APS) concept is useful to avoid redundancy between coded slices.

ALF on/off flags and ALF parameters are CTU in-loop filtering parameters that are signaled in the bitstream before signaling CTU blocks coded data.

**Figure 6** shows a schematic block diagram of steps of a method 200 of decoding a video picture VP of a video sequence in accordance with prior art.

In step 210, CTU coded blocks data and CTU in-loop filtering parameters are obtained by parsing and entropy decoding a bitstream of encoded video picture data. For instance, this bitstream has been generated in accordance with the method 100.

Other information data may also be parsed and entropy decoded for decoding from the bitstream a current block of the video picture VP.

In step 220, a reconstructed picture is divided into current blocks based on partitioning information data (CTU coded blocks data). Each current block is entropy decoded from the bitstream along a decoding loop also called "in loop". Each decoded current block is either a quantized transform coefficient block or quantized prediction residual block (CTU coded blocks data).

In step 230, the current block is de-quantized and possibly inverse transformed (step 240), to obtain a decoded prediction residual block.

On the other hand, the prediction information data (CTU coded blocks data) is used to predict the current block. A prediction block is obtained through its intra prediction (step 250) or its motion-compensated temporal prediction (step 260). The prediction process performed at the decoding side is identical to that of the encoding side.

Next, the decoded prediction residual block and the prediction block are then combined, typically summed, which provides a reconstructed block.

In step 270, in-loop filters using CTU in-loop filtering parameters apply to a reconstructed picture (comprising reconstructed blocks) and the filtered reconstructed blocks form a reference picture that may be stored into a decoded picture buffer (DPB) as above discussed (**Figure 5**).

In VVC, motion information is stored per 4x4 blocks in each video picture. This means once a reference picture is stored in the decoded picture buffer (DPB, **Figure 5** or **6**), motion vectors and reference pictures indices used for the temporal prediction of video picture blocks are stored on a 4x4 block basis. They can serve as temporal prediction of motion information for encoding/decoding a subsequent inter-prediction video picture.

Either in HEVC, VVC or future standards, or in the Enhanced Compression Model (ECM, M. Coban, F. Le L6annec, K. Naser, J. Ström, L. Zhang, "Algorithm description of Enhanced Compression Model 6 (ECM 6)", JVET-AA2025, October 2022.), the CTU in-loop filtering parameters are signaled in the bitstream before the CTU coded blocks data, while the in-loop filtering is applied after the CTU reconstruction.

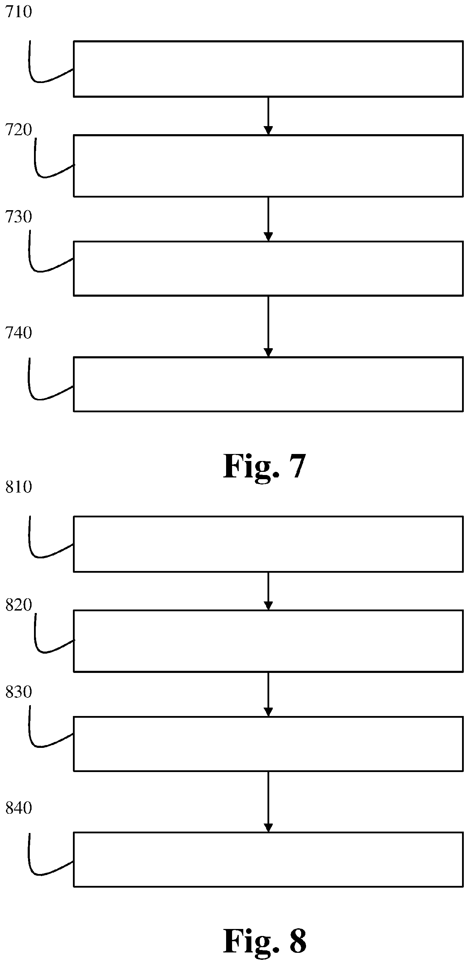

**Figure 7** shows a schematic block diagram illustrating the order of steps for encoding in a bitstream CTU coded blocks data relative to a CTU of a video picture and CTU in-loop filtering parameters used for performing in-loop filtering on reconstructed blocks of said CTU in accordance with prior art.

First, in step 710, CTU blocks coded data is obtained by encoding blocks of the CTU, denoted CTU blocks, according to the method of **Figure 5.** CTU blocks are then reconstructed. Next, in step 720, the reconstructed CTU blocks are filtered (in-loop filtering) using the CTU in-loop filtering parameters associated with the CTU. Next, in step 730, the CTU in-loop filtering parameters are entropy encoded and signaled in a bitstream. Then, in step 740, CTU coded blocks data is entropy encoded and signaled in the bitstream.

CTU in-loop filtering parameters are thus signaled in a bitstream before the CTU coded blocks data.

**Figure 8** shows a schematic block diagram illustrating the order of steps for decoding from a bitstream CTU coded blocks data used for decoding CTU blocks of a video picture and CTU in-loop filtering parameters used for performing in-loop filtering on reconstructed blocks of said CTU in accordance with prior art.

First, in step 810, CTU in-loop filtering parameters are obtained by parsing a bitstream and by applying entropy decoding. Then, in step 820, CTU coded blocks data is obtained by parsing the bitstream and by applying entropy decoding. The method of **Figure 6** decodes the CTU blocks by using the CTU coded blocks data and obtains, in step 830, reconstructed CTU blocks. Then, in step 840, the reconstructed CTU blocks are filtered (in-loop filtering) using the CTU in-loop filtering parameters.

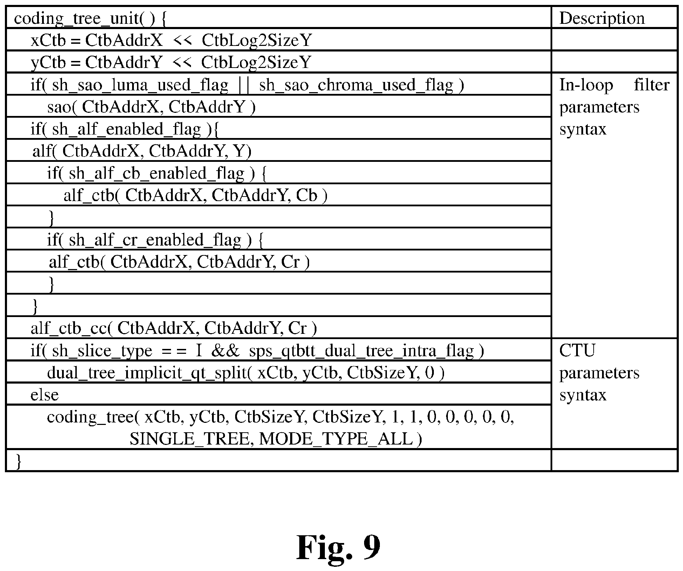

**Figure 9** shows an example of a coding structure **coding_tree_unit** relative to a CTU in accordance with prior art.

The coding structure **coding_tree_unit** shows that the CTU in-loop filtering parameters, i.e., the in-loop filtering parameters used for filtering reconstructed blocks of a CTU, are signaled in the bitstream before the CTU coded blocks data, i.e., syntax elements carrying the CTU in-loop parameters are written in the bitstream at the encoding side before syntax elements carrying the CTU coded blocks data are written in the bitstream.

In the above discussed video standards, there are dependencies in the CTU decoding (resp. encoding) process. First, CTU blocks reconstruction can start when the entropy decoding of the CTU coded blocks data is finished. Also, the CTU in-loop filtering can start only when the CTU blocks reconstruction process is finished. Generally, there is a lag of at least one CTU between the CTU in-loop filtering and the CTU block reconstruction as in-loop filters can be applied on CTU borders. Finally, the entropy decoding is sequential, so the decoding of the CTU coding parameters can start only when the entropy decoding of the CTU in-loop filters parameters is finished. CTU coded blocks data and CTU in-loop filtering parameters are independent, but the entropy decoding (resp. encoding) creates a dependency between both.

One of the problems solved by the present invention is to increase the encoding and decoding runtime performance of existing video coding standards without sacrificing the coding performances.

At least one exemplary embodiment of the present application has been devised with the foregoing in mind.

SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method for signaling in a bitstream coded block data and in-loop filtering parameters of a video sequence comprising video pictures, each video picture being split into multiple coding tree units, denoted CTU, each CTU comprising CTU blocks, CTU coded blocks data being obtained for each CTU by encoding blocks of said CTU, reconstructed CTU blocks associated with a CTU being obtained by decoding CTU coded blocks data associated with said CTU, reconstructed CTU blocks associated with a CTU being filtered using in-loop filtering parameters associated with said CTU, denoted CTU in-loop filtering parameters, wherein CTU coded blocks data associated with a CTU is signaled in the bitstream before signaling CTU in-loop filtering parameters associated with said CTU.

In one exemplary embodiment, CTU coded blocks data associated with all the CTUs of a coding structure comprising more than one CTU is signaled in the bitstream before signaling CTU in-loop filtering parameters associated with all the CTUs of said coding structure.

In one exemplary embodiment, a first syntax element is signaled in the bitstream to indicate whether signaling in the bitstream CTU coded blocks data associated with a CTU or with all the CTUs of the coding structure before signaling CTU in-loop filtering parameters associated with said CTU or with all the CTUs of said coding structure is enabled or not.

In one exemplary embodiment, the first syntax element is signaled at a video level to indicate whether signaling in the bitstream CTU coded blocks data associated with a CTU or with all the CTUs of the coding structure before signaling CTU in-loop filtering parameters associated with said CTU or with all the CTUs of the coding structure is enabled for different layers.

In one exemplary embodiment, if the first syntax element indicates signaling in the bitstream CTU coded blocks data associated with a CTU or with all CTUs of the coding structure before signaling CTU in-loop filtering parameters associated with the CTU or with all CTUs of the coding structure is enabled for different layers, then a second syntax element is signaled, in the bitstream, at the video level to indicate whether signaling, in the bitstream, CTU coded blocks data associated with a CTU or with all CTUs of the coding structure before signaling CTU in-loop filtering parameters associated with the CTU or with all CTUs of the coding structure, enabled for different layers, is allowed at a level different of the video level.

In one exemplary embodiment, the first syntax element is signaled at a sequence level to indicate whether signaling, in the bitstream, CTU coded blocks data associated with a CTU or with all CTUs of the coding structure before signaling CTU in-loop filtering parameters associated with the CTU or with all CTUs of the coding structure is enabled for the whole video sequence.

In one exemplary embodiment, if the first syntax element indicates signaling, in the bitstream, CTU coded blocks data associated with a CTU or with all CTUs of the coding structure before signaling CTU in-loop filtering parameters associated with the CTU or with all CTUs of the coding structure is enabled for the whole video sequence, then a second syntax element is signaled in the bitstream at the sequence level to indicate whether signaling in the bitstream CTU coded blocks data associated with a CTU or with all CTUs of the coding structure before signaling CTU in-loop filtering parameters associated with the CTU or with all CTUs of the coding structure is allowed at a level different of the sequence level.

In one exemplary embodiment, the first syntax element is signaled at the picture level to indicate whether signaling in the bitstream CTU coded blocks data associated with a CTU or with all CTUs of the coding structure before signaling CTU in-loop filtering parameters associated with the CTU or with all CTUs of the coding structure is enabled for at least one picture.

In one exemplary embodiment, if the first syntax element indicates signaling in the bitstream CTU coded blocks data associated with a CTU or with all CTUs of the coding structure before signaling CTU in-loop filtering parameters associated with the CTU or with all CTUs of the coding structure is enabled for at least one picture, then a second syntax element is signaled at the picture level to indicate whether signaling in the bitstream CTU coded blocks data associated with a CTU or with all CTUs of the coding structure before signaling CTU in-loop filtering parameters associated with the CTU or with all CTUs of the coding structure is allowed at a level different of the picture level.

In one exemplary embodiment, the first syntax element is signaled at the slice level to indicate whether signaling in the bitstream CTU coded blocks data associated with a CTU or with all CTUs of the coding structure before signaling CTU in-loop filtering parameters associated with the CTU or with all CTUs of the coding structure is enabled at slice level.

In one exemplary embodiment, the CTU in-loop filtering parameters associated with a CTU or with all CTUs of a coding structure are signaled per picture component.

In one exemplary embodiment, the CTU in-loop filtering parameters associated with a CTU or with all CTUs of a coding structure are signaled per filter type.

According to a second aspect of the present application, there is provided a method for encoding in a bitstream a video sequence comprising video pictures, each video picture being split into multiple coding tree units, denoted CTU, each CTU comprising CTU blocks, CTU coded blocks data being obtained for each CTU by encoding blocks of said CTU, reconstructed CTU blocks associated with a CTU being obtained by decoding CTU coded blocks data associated with said CTU, reconstructed CTU blocks associated with a CTU being filtered using in-loop filtering parameters associated with said CTU, denoted CTU in-loop filtering parameters, wherein the CTU coded blocks data and the CTU in-loop filtering parameters associated with a CTU are signaled according to a method according to the first aspect of the present invention.

According to a third aspect of the present application, there is provided a method for decoding from a bitstream a video sequence comprising video pictures, each video picture being split into multiple coding tree units, denoted CTU, each CTU comprising CTU blocks, CTU coded blocks data being obtained for each CTU by parsing the bitstream, reconstructed CTU blocks associated with a CTU being obtained by decoding CTU coded blocks data associated with said CTU, reconstructed CTU blocks associated with a CTU being filtered using in-loop filtering parameters associated with said CTU, denoted CTU in-loop filtering parameters, wherein the CTU coded blocks data and the CTU in-loop filtering parameters associated with a CTU are signaled according to a method according to the first aspect of the present invention.

According to a fourth aspect of the present application, there is provided a bitstream, formatted to include encoded video picture data and information data obtained from a method according to the second aspect.

According to a fourth aspect of the present application, there is provided an apparatus comprising means for performing one of the methods according to either the first, second or third aspect of the present invention.

According to a fifth aspect of the present application, there is provided a computer program product including instructions which, when the program is executed by one or more processors, causes the one or more processors to carry out a method of the methods according to either the first, second or third aspect of the present invention.

According to a sixth aspect of the present application, there is provided a non-transitory storage medium carrying instructions of program code for executing a method of the methods according to either the first, second or third aspect of the present invention.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

Figure 1 shows an example of coding-tree unit in accordance with HEVC;

Figure 2 shows an example of partitioning coding units into prediction units in accordance with HEVC;

Figure 3 shows an example of a CTU division in accordance with VVC;

Figure 4 shows examples of split modes supported in the multi-type tree partitioning in accordance with VVC;

Figure 5 shows a schematic block diagram of steps of a method 100 of encoding a video picture VP of a video sequence in accordance with prior art;

Figure 6 shows a schematic block diagram of steps of a method 200 of decoding a video picture VP of a video sequence in accordance with prior art;

Figure 7 shows a schematic block diagram illustrating the order of steps for producing, at the encoding side, CTU coded blocks data relative to a CTU of a video picture and CTU in-loop filtering parameters used for performing in-loop filtering on reconstructed blocks of said CTU in accordance with prior art;

Figure 8 shows a schematic block diagram illustrating the order of steps for producing, at the decoding side, CTU coded blocks data relative to a CTU of a video picture and CTU in-loop filtering parameters used for performing in-loop filtering on reconstructed blocks of said CTU in accordance with prior art;

Figure 9 shows an example of a coding structure **coding_tree_unit** relative to a CTU in accordance with prior art.

Figure 10 shows a schematic block diagram illustrating the order of steps for producing, at the encoding side, CTU coded blocks data relative to a CTU of a video picture and CTU in-loop filtering parameters used for performing in-loop filtering on reconstructed blocks of said CTU in accordance with exemplary embodiments of the present invention.

Figure 11 shows a schematic block diagram illustrating the order of steps for producing, at the decoding side, CTU coded blocks data relative to a CTU of a video picture and CTU in-loop filtering parameters used for performing in-loop filtering on reconstructed blocks of said CTU in accordance with exemplary embodiments of the present invention.

Figure 12 shows a schematic block diagram of a variant of the method of **Figure 10.**

Figure 13 shows a schematic block diagram of a variant of the method of **Figure 11.**

Figure 14 shows an example of a coding structure **coding_tree_unit** in accordance with an exemplary embodiment of the present invention;

Figure 15 shows an example of a coding structure **seq_parameter_set_rbsp** in accordance with an exemplary embodiment of the present invention;

Figure 16 shows a schematic block diagram illustrating the order of steps for producing, at the encoding side, series of CTU coded blocks data relative to CTUs of a coding structure of a video picture and CTU in-loop filtering parameters used for performing in-loop filtering on reconstructed blocks of said CTUs in accordance with exemplary embodiments of the present invention;

Figure 17 shows a schematic block diagram illustrating the order of steps for producing, at the decoding side, a series of CTU coded blocks data relative to CTUs of a coding structure of a video picture and CTU in-loop filtering parameters used for performing in-loop filtering on reconstructed blocks of said CTUs in accordance with exemplary embodiments of the present invention;

Figure 18 shows an example of coding structure **slice_data** relative to a slice in accordance with an exemplary embodiment of the present invention;

Figure 19 shows an example of coding structure **coding_tree_unit** relative to a slice in accordance with an exemplary embodiment of the present invention;

Figure 20 shows an example of coding structure **in-loopfilter_coding_tree_unit** relative to a slice in accordance with an exemplary embodiment of the present invention;

**Figure 21** shows an example of coding structure **seq_parameter_set_rbsp** in accordance with an exemplary embodiment of the present invention;

**Figure 22** illustrates a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspect relates to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en), VVC (ISO/IEC 23090-3 Versatile Video Coding, ITU-T Recommendation H.266, https://www.itu.int/rec/T-REC-H.266-202008-I/en) but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present application may be used individually or in combination.

Generally speaking, the present application relates to a method for signaling in a bitstream CTU coded blocks data and CTU in-loop filtering parameters of a video sequence wherein the CTU coded blocks data are signaled in the bitstream before the CTU in-loop filtering parameters.

The present invention improves the signaling of the syntax relative to CTU coded blocks data and CTU in-loop filtering parameters. The present invention takes the benefit of reordering the bitstream syntax to discard nonrelevant dependencies and to enable further level of parallelisms of the encoding and decoding processes, without sacrificing video compression efficiency.

On the encoder side, the bitstream entropy coding can start earlier increasing the potential parallelism and enabling the support of higher resolution and higher bitrate in real-time.

Indeed, aligning the bitstream structure with the decoding steps allows for reducing the lag between the syntax parsing and the CTU blocks reconstruction process. Moreover, on the decoder side, the level of parallelization enables a possible earlier start of the CTU reconstruction, reducing the total decoding time of a frame, i.e., reducing the time between the start of the entropy decoding, and the end of the in-loop filtering. By reducing the total decoding time, a decoder may be able to support a real-time decoding for higher resolution, and/or higher bitrate.

Signaling CTU coded blocks data and CTU in-loop filtering parameters according to the present invention is compatible both with legacy coding standards that only allow one parallel processing mechanism to be implemented at a time but is also compatible with video coding that may allow for more than one parallel processing mechanism to be implemented simultaneously.

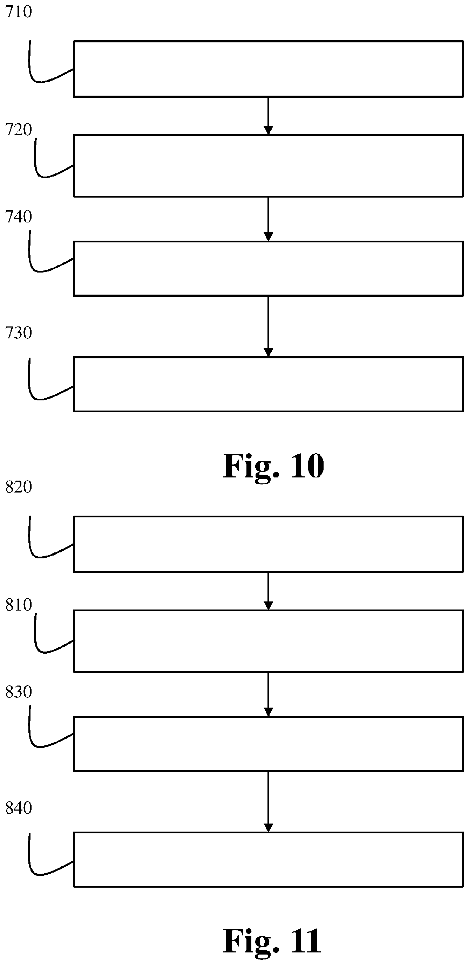

**Figure 10** shows a schematic block diagram illustrating the order of steps for producing, at the encoding side, CTU coded blocks data relative to a CTU of a video picture and CTU in-loop filtering parameters used for performing in-loop filtering on reconstructed blocks of said CTU in accordance with exemplary embodiments of the present invention.

First, steps 710 and 720 are performed. Then, step 740 is performed and finally step 730 is performed.

**Figure 11** shows a schematic block diagram illustrating the order of steps for producing, at the decoding side, CTU coded blocks data relative to a CTU of a video picture and CTU in-loop filtering parameters used for performing in-loop filtering on reconstructed blocks of said CTU in accordance with exemplary embodiments of the present invention.

First, step 820 is performed. Then, step 810 is performed. Finally, steps 830 and 840 are performed.

Multiple exemplary embodiments of the method propose to interleave the CTU coded blocks data and the CTU in-loop filter parameters signaling at different levels to discard inherited dependencies between the CTU blocks reconstruction and the CTU in-loop-filtering parameters signaling process. Then, both these two processes are independent and can be done in parallel.

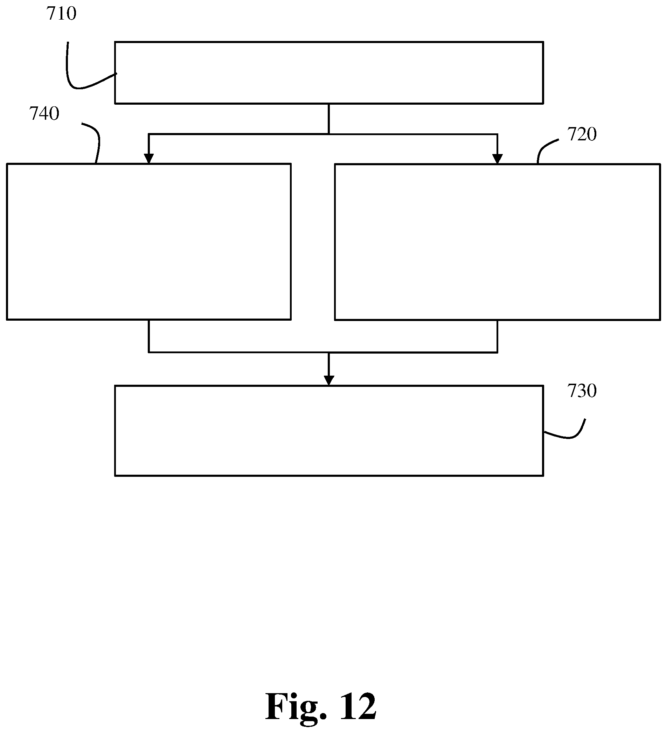

**Figure 12** shows an example of parallelism of steps 720 and 740 of the method of **Figure 10.**

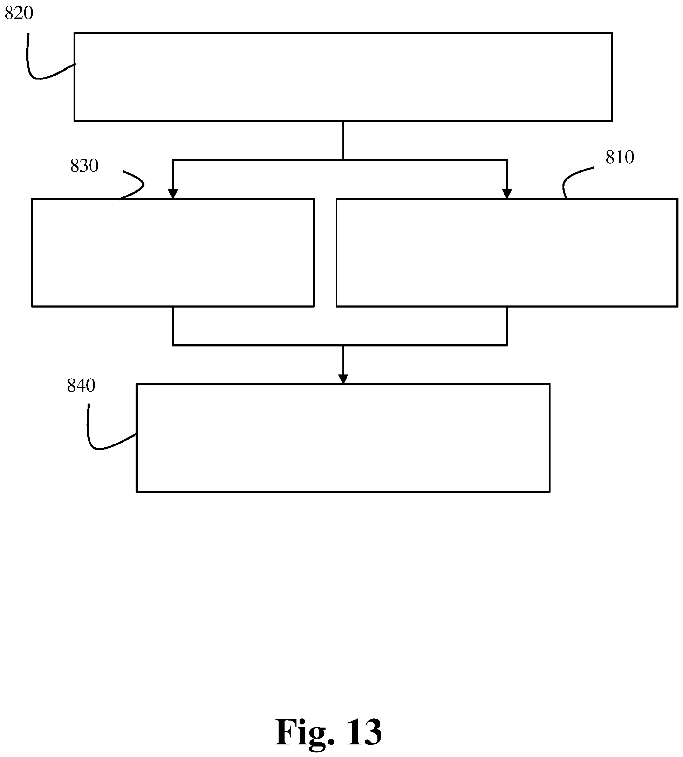

**Figure 13** shows an example of parallelism of steps 810 and 830 of the method of **Figure 11.**

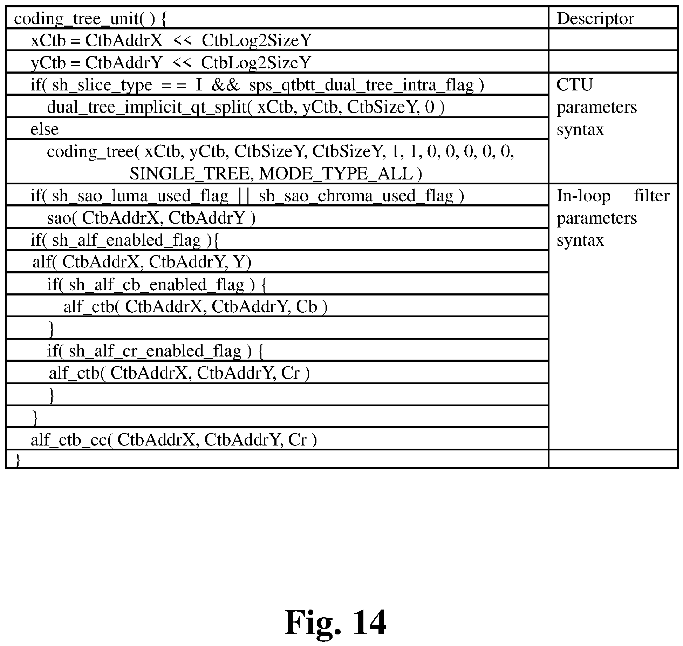

**Figure 14** shows a coding structure **coding_tree_unit** in accordance with an exemplary embodiment of the present invention.

The coding structure **coding_tree_unit** is similar to the coding structure **coding_tree_unit** of **Figure 9** except that the syntax relative to the CTU coded blocks data is signaled in the bitstream before the CTU in-loop filtering parameters.

In a first exemplary embodiment, CTU coded blocks data associated with a CTU is signaled in the bitstream before signaling CTU in-loop filtering parameters associated with said CTU, i.e., CTU in-loop filtering parameters used for filtering reconstructed blocks of said CTU.

Signaling CTU coded blocks data associated with a CTU (used for coding/decoding/reconstructing blocks of a CTU) in a bitstream before signaling CTU in-loop filtering parameters (used for filtering said blocks) can be completed with high-level syntax to enable adaptations at the Sequence Picture Set (SPS), Picture Parameter Set (PPS), Video Parameter Set (VPS), Adaptation Parameter Set (APS), and slice header (HS) of VVC, ECM, or any video codec with similar high level syntax containers.

In a first variant of the first exemplary embodiment, a first syntax element, for example a binary data, is signaled in the bitstream to indicate whether signaling in the bitstream CTU coded blocks data associated with a CTU before signaling CTU in-loop filtering parameters associated with said CTU is enabled or not.

In a first exemplary embodiment of the first variant, the first syntax element is signaled at the video level, for example in VPS, to indicate whether signaling in the bitstream CTU coded blocks data associated with a CTU before signaling CTU in-loop filtering parameters associated with said CTU is enabled for different layers.

In VCC (Rec. ITU-T H.266 | ISO/IEC 23090-3, "Versatile Video Coding", 2020.) and ECM, a layer is a set of VCL NAL units that produce a decoded content. Multiple layers into bitstreams enable producing alternative or supplemental decoded contents, providing a content with different quality, different spatial resolution or different views. As example, VVC supports temporal scalability, quality scalability (a.k.a. signal-to-noise-ratio (SNR) scalability), spatial scalability and multi-view scalability.

In the video coding standardization community, and specifically in the Joint Video Experts Team (JVET) of the ITU-T and ISO/IEC, a system interface is modeled as a network abstraction layer (NAL), and the data structures carried by this interface are known as NAL units. A coded video bitstream consists of a series of NAL units. The NAL units that represent the values of color component samples are called the video coding layer (VCL) NAL units or coded slice NAL units. The compressed data within the VCL NAL units is called the slice data, and the slice data in each slice consists of a series of CTUs that are sent according to a particular scanning order.

In a variant of the first variant, if the first syntax element indicates signaling, in the bitstream, CTU coded blocks data associated with a CTU before signaling CTU in-loop filtering parameters associated with said CTU is enabled for different layers, then a second syntax element, for example a binary data, is signaled in the bitstream at the video level, for example in VPS, to indicate whether signaling, in the bitstream, CTU coded blocks data associated with a CTU before signaling CTU in-loop filtering parameters associated with said CTU, enabled for different layers, is allowed at a level different of the video level, for example at the sequence level.

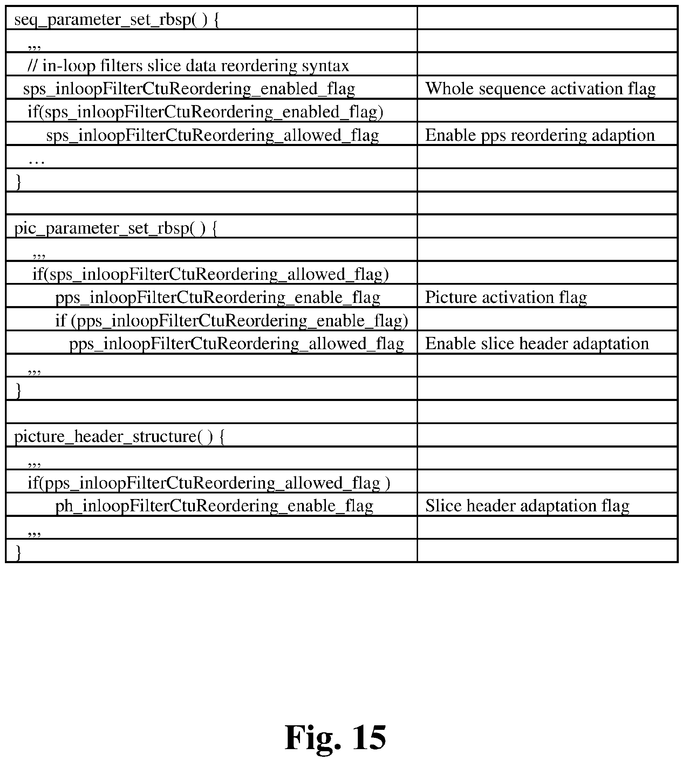

In a second exemplary embodiment of the first variant, illustrated in **Figure 15,** the first syntax element, denoted **sps_inloopFilterCtuReordering_enabled_flag** is signaled at the sequence level, for example in SPS, to indicate whether signaling in the bitstream CTU coded blocks data associated with a CTU before signaling CTU in-loop filtering parameters associated with said CTU is enabled for the whole video sequence.

In a variant of the second exemplary embodiment, if **sps_inloopFilterCtuReordering_enabled_flag** indicates signaling in the bitstream the CTU coded blocks data associated with a CTU before signaling CTU in-loop filtering parameters associated with a CTU is enabled for the whole video sequence, then a second syntax element, for example a binary data, denoted **sps_inloopFilterCtuReordering_allowed_flag,** is signaled at the sequence level, for example in SPS, to indicate whether signaling, in the bitstream, CTU coded blocks data associated with a CTU before signaling CTU in-loop filtering parameters associated with a CTU is allowed at a level different of the sequence level, for example at the picture level.

In a third exemplary embodiment of the first variant, illustrated in **Figure 15,** the first syntax element, denoted **pps_inloopFilterCtuReordering_enable_flag,** is signaled at the picture level, for example in a PPS, to indicate whether signaling in the bitstream the CTU coded blocks data associated with a CTU before signaling CTU in-loop filtering parameters associated with a CTU is enabled for at least one picture, for example for pictures referring to a same PPS.

In a variant of the third exemplary embodiment, if **pps_inloopFilterCtuReordering_enable_flag** indicates signaling in the bitstream CTU coded blocks data associated with a CTU before signaling CTU in-loop filtering parameters associated with a CTU is enabled for at least one picture, a second syntax element, for example a binary data, denoted **pps_inloopFilterCtuReordering_allowed_flag,** is signaled at the picture level, for example in a PPS, to indicate whether signaling in the bitstream the CTU coded blocks data associated with a CTU before signaling CTU in-loop filtering parameters associated with a CTU is allowed at a level different of the picture level, for example at the slice level.

This exemplary embodiment is advantageous because using PPS with different second syntax elements helps reduce the amount of signaled data.

In a fourth exemplary embodiment of the first variant, illustrated in **Figure 15,** a syntax element, for example a binary data, denoted **ph_inloopFilterCtuReordering_enable_flag,** is signaled at the slice level, for example in a slice header (**picture_header_structure**) to indicate whether signaling in the bitstream the CTU coded blocks data associated with a CTU before signaling CTU in-loop filtering parameters associated with a CTU used for filtering said blocks is enabled for a slice.

In a second exemplary embodiment, CTU coded blocks data associated with all CTUs of a coding structure is signaled in the bitstream before signaling CTU in-loop filtering parameters associated with all CTUs of said coding structure, i.e., CTU in-loop filtering parameters used for filtering reconstructed blocks of each CTU of said coding structure. CTU coded blocks data associated with all CTUs of a coding structure is signaled in the bitstream before signaling CTU in-loop filtering parameters associated with all the CTUs of said coding structure.

The second exemplary embodiment consists in dissociating the CTU coded blocks data associated with all the CTUs of a coding structure and the CTU in-loop filters parameters associated with all the CTUs of a coding structure.

The second exemplary embodiment enables a higher level of parallelism by dissociating completely the CTU coded blocks data from the CTU in-loop filtering parameters.

Regarding the decoding process, the CTU reconstruction and the entropy decoding process of the CTU in-loop filtering parameters can be processed in parallel at a level higher than the CTU level.

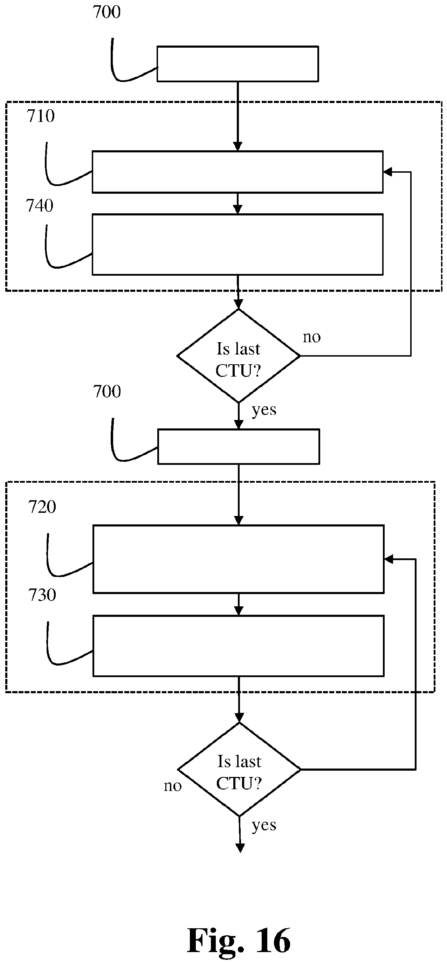

**Figure 16** shows a schematic block diagram illustrating the order of steps for producing, at the encoding side, a series of CTU coded blocks data relative to CTUs of a coding structure of a video picture and CTU in-loop filtering parameters used for performing in-loop filtering on reconstructed blocks of said CTUs in accordance with exemplary embodiments of the present invention.

In **Figure 16,** the coding structure is a slice but the present invention may extend to any other coding structure such a tile or a sub-picture.

First, in step 700, a CTU index is initialized. The CTU index refers to a current CTU of a coding structure, here a slice. In step 710, CTU blocks coded data is obtained by encoding blocks of the current CTU according to the method of **Figure 5.** The blocks of the current CTU are then reconstructed.

Next, in step 740, CTU coded blocks data of the current CTU is entropy encoded and signaled in a bitstream.

The CTU index is incremented and steps 710 and 740 iterate until all CTUs of the slice are considered.

In step 700, the CTU index is initialized. The CTU index refers to a current CTU of a coding structure, here a slice. In step 720, the reconstructed CTU blocks of the current CTU are filtered (in-loop filtering) using the CTU in-loop filtering parameters associated with the current CTU. Next, in step 730, the CTU in-loop filtering parameters associated with the current CTU are entropy encoded and signaled in a bitstream.

The CTU index is incremented and steps 720 and 730 iterate until all CTUs of the slice are considered.

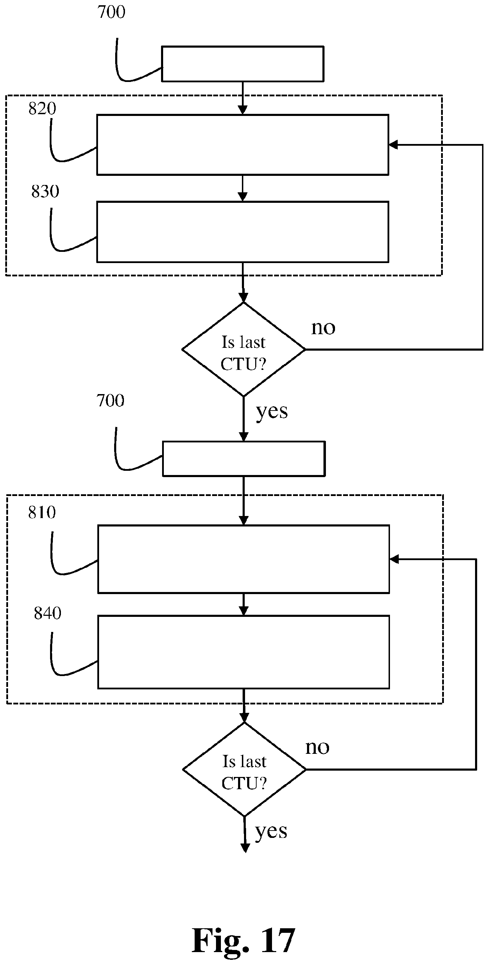

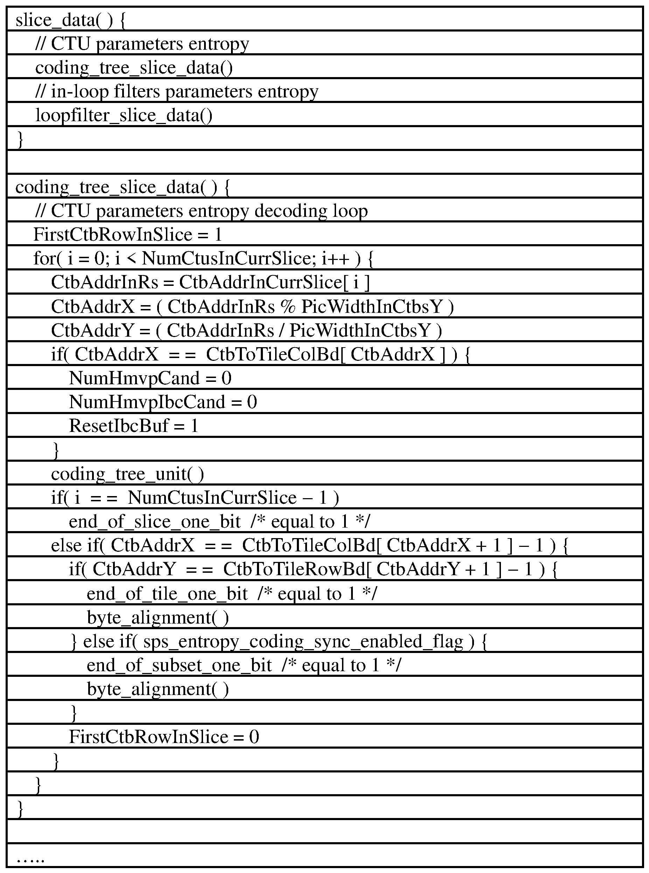

**Figure 17** shows a schematic block diagram illustrating the order of steps for producing, at the decoding side, a series of CTU coded blocks data relative to CTUs of a coding structure of a video picture and CTU in-loop filtering parameters used for performing in-loop filtering on reconstructed blocks of said CTUs in accordance with exemplary embodiments of the present invention.

In **Figure 17,** the coding structure is a slice but the present invention may extend to any other coding structure such a tile or a sub-picture.

First, in step 700 a CTU index is initialized. The CTU index refers to a current CTU of coding structure, here a slice. In step 820, CTU coded blocks data associated with the current CTU is obtained by parsing the bitstream and by applying entropy decoding. The method of **Figure 6** decodes the blocks of the current CTU by using the CTU coded blocks data associated with the current CTU and obtains, in step 830, reconstructed CTU blocks associated with the current CTU.

The CTU index is incremented and steps 820 and 830 iterate until all CTUs of the slice are considered.

In step 700, the CTU index is initialized. The CTU index refers to a current CTU of coding structure, here a slice. In step 810, CTU in-loop filtering parameters associated with the current CTU are obtained by parsing a bitstream and by applying entropy decoding. In step 840, the reconstructed CTU blocks associated with the current CTU are filtered (in-loop filtering) using the CTU in-loop filtering parameters associated with the current CTU.

The CTU index is incremented and steps 810 and 840 iterate until all CTUs of the slice are considered.

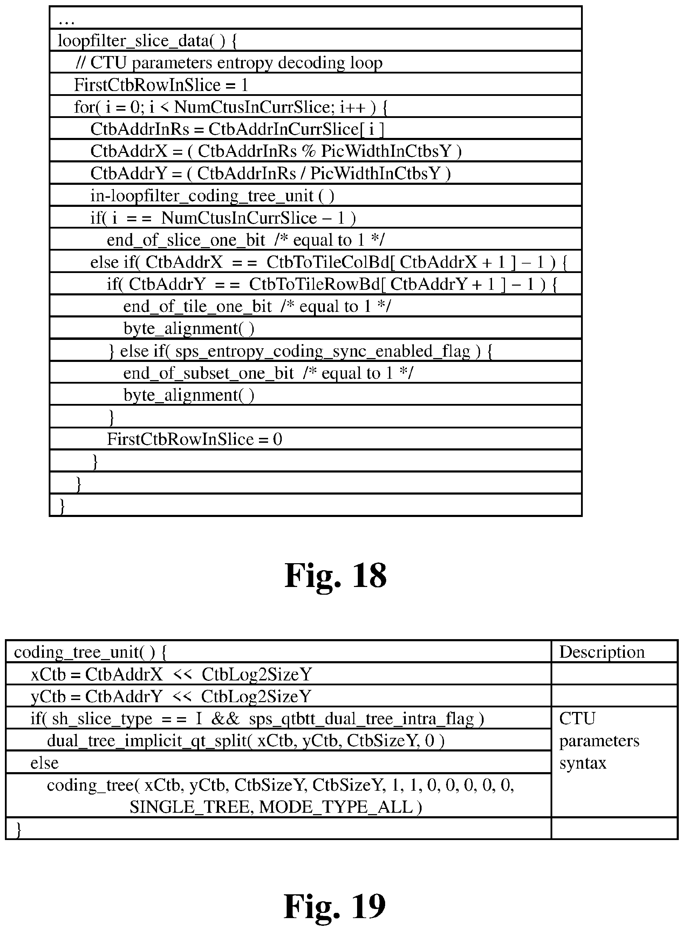

**Figure 18** shows an example of coding structure **slice_data** relative to a slice in accordance with an exemplary embodiment of the present invention.

The coding structure **slice-data** in **Figure 18** is an updated version of the coding structure **slice_data** as defined in VVC.

The coding structure **slice-data** in **Figure 18** comprises a syntax element **coding_tree_slice_data** carrying the CTU coded blocks data associated with all the CTUs of the coding structure, here a slice, and a coding structure **loopfilter_slice_data** carrying the CTU in-loop filtering parameters associated with all the CTUs of the coding structure, here a slice.

The coding structures **coding_tree_slice_data** comprises a coding structure **coding_tree_unit** as illustrated on **Figure 19.** Said coding structure **coding_tree_unit** comprises the syntax elements relative to the CTU coded blocks data of the coding structure **coding_tree_unit** in **Figure 14.**

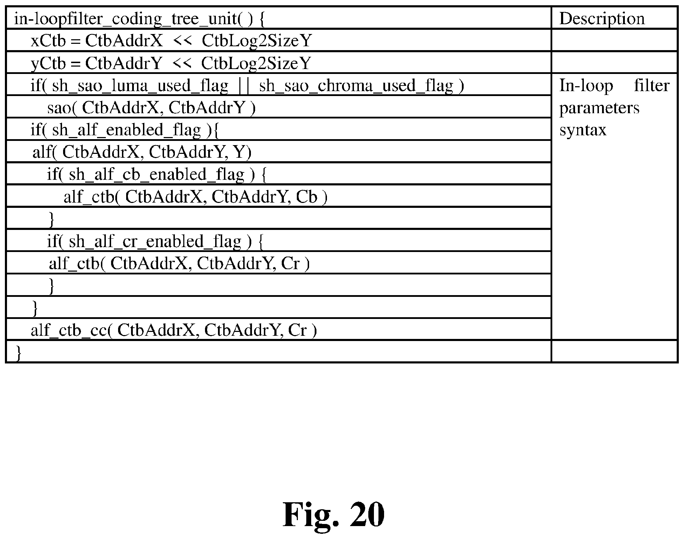

The coding structure **loopfilter_slice_data** comprises a coding structure **in-loopfilter_coding_tree_unit** as illustrated on **Figure 20.** Said coding structure **in-loopfilter_coding_tree_unit** comprises the syntax elements relative to the CTU in-loop filtering parameters of the coding structure **coding_tree_unit** in **Figure 14.**

Signaling in a bitstream CTU coded blocks data associated with all the CTUs of a coding structure before signaling CTU in-loop filtering parameters associated with all the CTUs of said coding structure can be completed with high-level syntax to enable adaptations at the Sequence Picture Set (SPS), Picture Parameter Set (PPS), Video Parameter Set (VPS), Adaptation Parameter Set (APS), and slice header (HS) of current VVC.

In a first variant of the second exemplary embodiment, a first syntax element, for example a binary data, is signaled in the bitstream to indicate whether signaling in the bitstream CTU coded blocks data associated with all the CTUs of a coding structure before signaling CTU in-loop filtering parameters associated with all the CTUs of said coding structure is enabled or not.

In an exemplary embodiment of the first variant, the first syntax element is signaled at the video level, for example in VPS, to indicate whether signaling in the bitstream CTU coded blocks data associated with all the CTUs of a coding structure before signaling CTU in-loop filtering parameters associated with all the CTUs of the coding structure is enabled for different layers.

In a variant of the first variant, if the first syntax element indicates signaling in the bitstream CTU coded blocks data associated with all the CTUs of a coding structure before signaling CTU in-loop filtering parameters associated with all the CTUs of the coding structure is enabled for different layers, then a second syntax element, for example a binary data, is signaled in the bitstream at the video level, for example in VPS, to indicate whether signaling CTU coded blocks data associated with all the CTUs of a coding structure before signaling CTU in-loop filtering parameters associated with all the CTUs of the coding structure, enabled for different layers, is allowed at a level different of the video level, for example at the sequence level.

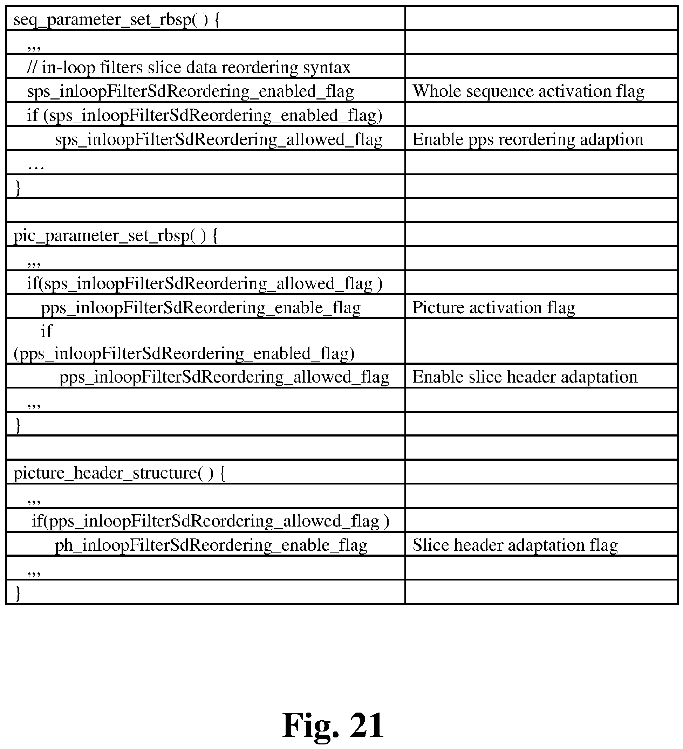

In a second exemplary embodiment of the first variant, illustrated in **Figure 21,** the first syntax element, denoted **sps_inloopFilterSdReordering_enabled_flag** in **Figure 21,** is signaled at the sequence level, for example in SPS, to indicate whether signaling in the bitstream CTU coded blocks data associated with a CTU or with all CTUs of the coding structure before signaling CTU in-loop filtering parameters associated with the CTU or with all CTUs of the coding structure is allowed for the whole video sequence.

In a variant of the second exemplary embodiment, if **sps_inloopFilterSdReordering_enabled_flag** indicates CTU coded blocks data associated with a CTU or with all CTUs of the coding structure before signaling CTU in-loop filtering parameters associated with the CTU or with all CTUs of the coding structure is enabled for the whole video sequence, a second syntax element, for example a binary data, denoted **pps_inloopFilterSdReordering_allowed_flag,** is signaled at the sequence level, for example in SPS, to indicate whether CTU coded blocks data associated with a CTU or with all CTUs of the coding structure before signaling CTU in-loop filtering parameters associated with the CTU or with all CTUs of the coding structure is allowed at a level different of the sequence level, for example at the picture level.

In a third exemplary embodiment of the first variant, illustrated in **Figure 21,** the first syntax element, denoted **pps_inloopFilterSdReordering_enable_flag,** is signaled at the picture level, for example in a PPS, to indicate whether CTU coded blocks data associated with a CTU or with all CTUs of the coding structure before signaling CTU in-loop filtering parameters associated with the CTU or with all CTUs of the coding structure is enabled for at least one picture, for example for pictures referring to a same PPS.

In a variant of the third exemplary embodiment, if **pps_inloopFilterSdReordering_enable_flag** indicates CTU coded blocks data associated with a CTU or with all CTUs of the coding structure before signaling CTU in-loop filtering parameters associated with the CTU or with all CTUs of the coding structure is enabled for at least one picture, a second syntax element, for example a binary data, denoted **pps_inloopFilterSdReordering_allowed_flag,** is signaled at the picture level, for example in a PPS, to indicate CTU coded blocks data associated with a CTU or with all CTUs of the coding structure before signaling CTU in-loop filtering parameters associated with the CTU or with all CTUs of the coding structure is allowed at a level different of the picture level, for example at the slice level.

This exemplary embodiment is advantageous because using PPS with different second syntax elements helps reduce the amount of signaled data.

In a fourth exemplary embodiment of the first variant, illustrated in **Figure 21,** if **pps_inloopFilterSdReordering_allowed_flag** indicates CTU coded blocks data associated with a CTU or with all CTUs of the coding structure before signaling CTU in-loop filtering parameters associated with the CTU or with all CTUs of the coding structure is allowed at a level different of the picture level, for example the slice level, a second syntax element, for example a binary data, denoted **ph_inloopFilterSdReordering_enable_flag,** is signaled in a syntax element of said level, for example in a slice header when said level is a slice level, to indicate whether CTU coded blocks data associated with a CTU or with all CTUs of the coding structure before signaling CTU in-loop filtering parameters associated with the CTU or with all CTUs of the coding structure is enabled at said level, for example at the slice level.

In a variant of the second exemplary embodiment, the CTU in-loop filtering parameters associated with a CTU or with all the CTUs of a coding structure are signaled per picture component.

This variant is advantageous because an in-loop filter can have specific syntaxes for different picture components. For example, different in-loop filter syntaxes can be signaled, one for luma component and one for each chroma picture component.

In one exemplary embodiment, a coding structure **loopfilter_slice_data** of **Figure 18** can be used for signaling CTU in-loop filtering parameters associated with a CTU or with all CTUs of a coding structure per picture component.

In another variant of the exemplary embodiment, CTU in-loop filtering parameters associated with a CTU or with all CTUs of a coding structure are signaled per filter type.

For example, CTU in-loop filtering parameters associated with a CTU or with some CTUs of a coding structure can be signaled for SAO and other CTU in-loop parameters associated with another CTU or with other CTUs of said coding structure can be signaled for ALF.

In one exemplary embodiment, a modified version of the coding structure **loopfilter_slice_data** of **Figure 18** can be used for signaling CTU in-loop filtering parameters used by a particular filter.

The modifications are quite straightforward and consist in dissociating the loop over all CTUs in the coding structure **loopfilter_slice_data** of **Figure 18,** into up to as many different loops as many existing filters.

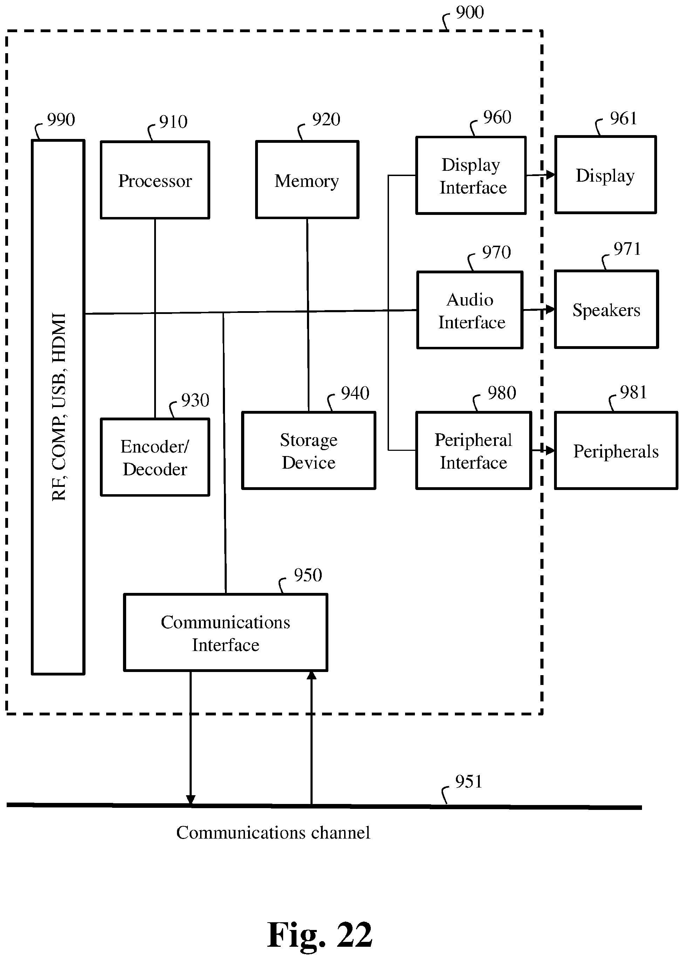

**Figure 22** shows a schematic block diagram illustrating an example of a system 900 in which various aspects and exemplary embodiments are implemented.

System 900 may be embedded as one or more devices including the various components described below. In various exemplary embodiments, system 900 may be configured to implement one or more of the aspects described in the present application.

Examples of equipment that may form all or part of the system 900 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 900, singly or in combination, may be embodied in a single integrated circuit (IC), multiple ICs, and/or discrete components. For example, in at least one exemplary embodiment, the processing and encoder/decoder elements of system 900 may be distributed across multiple ICs and/or discrete components. In various exemplary embodiments, system 900 may be communicatively coupled to other similar systems, or to other electronic devices, via, for example, a communications bus or through dedicated input and/or output ports.

System 900 may include at least one processor 910 configured to execute instructions loaded therein for implementing, for example, the various aspects described in the present application. Processor 910 may include embedded memory, input output interface, and various other circuitries as known in the art. System 900 may include at least one memory 920 (for example a volatile memory device and/or a non-volatile memory device). System 900 may include a storage device 940, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 940 may include an internal storage device, an attached storage device, and/or a network accessible storage device, as non-limiting examples.

System 900 may include an encoder/decoder module 930 configured, for example, to process data to provide encoded/decoded video picture data, and the encoder/decoder module 930 may include its own processor and memory. The encoder/decoder module 930 may represent module(s) that may be included in a device to perform the encoding and/or decoding functions. As is known, a device may include one or both encoding and decoding modules. Additionally, encoder/decoder module 930 may be implemented as a separate element of system 900 or may be incorporated within processor 910 as a combination of hardware and software as known to those skilled in the art.

Program code to be loaded onto processor 910 or encoder/decoder 930 to perform the various aspects described in the present application may be stored in storage device 940 and subsequently loaded onto memory 920 for execution by processor 910. In accordance with various exemplary embodiments, one or more of processor 910, memory 920, storage device 940, and encoder/decoder module 930 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 910 and/or the encoder/decoder module 930 may be used to store instructions and to provide working memory for processing that may be performed during encoding or decoding.

In other exemplary embodiments, however, a memory external to the processing device (for example, the processing device may be either the processor 910 or the encoder/decoder module 930) may be used for one or more of these functions. The external memory may be the memory 920 and/or the storage device 940, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 900 may be provided through various input devices as indicated in block 990. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 990 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 900 to other electronic devices across USB and/or HDMI connections. It is to be understood that various aspects of input processing, for example, Reed-Solomon error correction, may be implemented, for example, within a separate input processing IC or within processor 910 as necessary. Similarly, aspects of USB or HDMI interface processing may be implemented within separate interface ICs or within processor 910 as necessary. The demodulated, error corrected, and demultiplexed stream may be provided to various processing elements, including, for example, processor 910, and encoder/decoder 930 operating in combination with the memory and storage elements to process the data stream as necessary for presentation on an output device.

Various elements of system 900 may be provided within an integrated housing. Within the integrated housing, the various elements may be interconnected and transmit data therebetween using suitable connection arrangement 990, for example, an internal bus as known in the art, including the I2C bus, wiring, and printed circuit boards.

The system 900 may include communication interface 950 that enables communication with other devices via communication channel 951. The communication interface 950 may include, but is not limited to, a transceiver configured to transmit and to receive data over communication channel 951. The communication interface 950 may include, but is not limited to, a modem or network card and the communication channel 951 may be implemented, for example, within a wired and/or a wireless medium.

Data may be streamed to system 900, in various exemplary embodiments, using a Wi-Fi network such as IEEE 802.11. The Wi-Fi signal of these exemplary embodiments may be received over the communications channel 951 and the communications interface 950 which are adapted for Wi-Fi communications. The communications channel 951 of these exemplary embodiments may be typically connected to an access point or router that provides access to outside networks including the Internet for allowing streaming applications and other over-the-top communications.

Other exemplary embodiments may provide streamed data to the system 900 using a set-top box that delivers the data over the HDMI connection of the input block 990.

Still other exemplary embodiments may provide streamed data to the system 900 using the RF connection of the input block 990.

The streamed data may be used as a way for signaling information used by the system 900. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 900 may provide an output signal to various output devices, including a display 961, speakers 971, and other peripheral devices 981. The other peripheral devices 981 may include, in various examples of exemplary embodiments, one or more of a stand-alone DVR, a disk player, a stereo system, a lighting system, and other devices that provide a function based on the output of system 900.

In various exemplary embodiments, control signals may be communicated between the system 900 and the display 961, speakers 971, or other peripheral devices 981 using signaling such as AV.Link (Audio/Video Link), CEC (Consumer Electronics Control), or other communications protocols that enable device-to-device control with or without user intervention.

The output devices may be communicatively coupled to system 900 via dedicated connections through respective interfaces 960, 970, and 980.

Alternatively, the output devices may be connected to system 900 using the communications channel 951 via the communications interface 950. The display 961 and speakers 971 may be integrated in a single unit with the other components of system 900 in an electronic device such as, for example, a television.

In various exemplary embodiments, the display interface 960 may include a display driver, such as, for example, a timing controller (T Con) chip.

The display 961 and speaker 971 may alternatively be separate from one or more of the other components, for example, if the RF portion of input 990 is part of a separate set-top box. In various exemplary embodiments in which the display 961 and speakers 971 may be external components, the output signal may be provided via dedicated output connections, including, for example, HDMI ports, USB ports, or COMP outputs.

In **Figures 1-22,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 910 or by hardware, or by a combination of hardware and software. As a non-limiting example, the exemplary embodiments may be also implemented by one or more integrated circuits. The memory 920 may be of any type appropriate to the technical environment and may be implemented using any appropriate data storage technology, such as optical memory devices, magnetic memory devices, semiconductor-based memory devices, fixed memory, and removable memory, as non-limiting examples. The processor 910 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as CTU coded blocks data, CTU in-loop filtering parameters or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for signaling in a bitstream coded block data and in-loop filtering parameters of a video sequence comprising video pictures, each video picture being split into multiple coding tree units, denoted CTU, each CTU comprising CTU blocks, CTU coded blocks data being obtained for each CTU by encoding blocks of said CTU, reconstructed CTU blocks associated with a CTU being obtained by decoding CTU coded blocks data associated with said CTU, reconstructed CTU blocks associated with a CTU being filtered using in-loop filtering parameters associated with said CTU, denoted CTU in-loop filtering parameters, wherein CTU coded blocks data associated with a CTU is signaled in the bitstream before signaling CTU in-loop filtering parameters associated with said CTU.

2. The method of claim 1, wherein CTU coded blocks data associated with all the CTUs of a coding structure comprising more than one CTU is signaled in the bitstream before signaling CTU in-loop filtering parameters associated with all the CTUs of said coding structure.

3. The method of claim 1 or 2, wherein a first syntax element is signaled in the bitstream to indicate whether signaling in the bitstream CTU coded blocks data associated with a CTU or with all the CTUs of the coding structure before signaling CTU in-loop filtering parameters associated with said CTU or with all the CTUs of said coding structure is enabled or not.

4. The method of claim 3, wherein the first syntax element is signaled at a video level to indicate whether signaling in the bitstream CTU coded blocks data associated with a CTU or with all the CTUs of the coding structure before signaling CTU in-loop filtering parameters associated with said CTU or with all the CTUs of the coding structure is enabled for different layers.

5. The method of claim 4, wherein if the first syntax element indicates signaling in the bitstream CTU coded blocks data associated with a CTU or with all CTUs of the coding structure before signaling CTU in-loop filtering parameters associated with the CTU or with all CTUs of the coding structure is enabled for different layers, then a second syntax element is signaled, in the bitstream, at the video level to indicate whether signaling, in the bitstream, CTU coded blocks data associated with a CTU or with all CTUs of the coding structure before signaling CTU in-loop filtering parameters associated with the CTU or with all CTUs of the coding structure, enabled for different layers, is allowed at a level different of the video level.

6. The method of claim 3, wherein the first syntax element is signaled at a sequence level to indicate whether signaling, in the bitstream, CTU coded blocks data associated with a CTU or with all CTUs of the coding structure before signaling CTU in-loop filtering parameters associated with the CTU or with all CTUs of the coding structure is enabled for the whole video sequence.

7. The method of claim 6, wherein if the first syntax element indicates signaling, in the bitstream, CTU coded blocks data associated with a CTU or with all CTUs of the coding structure before signaling CTU in-loop filtering parameters associated with the CTU or with all CTUs of the coding structure is enabled for the whole video sequence, then a second syntax element is signaled in the bitstream at the sequence level to indicate whether signaling in the bitstream CTU coded blocks data associated with a CTU or with all CTUs of the coding structure before signaling CTU in-loop filtering parameters associated with the CTU or with all CTUs of the coding structure is allowed at a level different of the sequence level.

8. The method of claim 3, wherein the first syntax element is signaled at the picture level to indicate whether signaling in the bitstream CTU coded blocks data associated with a CTU or with all CTUs of the coding structure before signaling CTU in-loop filtering parameters associated with the CTU or with all CTUs of the coding structure is enabled for at least one picture.

9. The method of claim 8, wherein if the first syntax element indicates signaling in the bitstream CTU coded blocks data associated with a CTU or with all CTUs of the coding structure before signaling CTU in-loop filtering parameters associated with the CTU or with all CTUs of the coding structure is enabled for at least one picture, then a second syntax element is signaled at the picture level to indicate whether signaling in the bitstream CTU coded blocks data associated with a CTU or with all CTUs of the coding structure before signaling CTU in-loop filtering parameters associated with the CTU or with all CTUs of the coding structure is allowed at a level different of the picture level.

10. The method of claim 3, wherein the first syntax element is signaled at the slice level to indicate whether signaling in the bitstream CTU coded blocks data associated with a CTU or with all CTUs of the coding structure before signaling CTU in-loop filtering parameters associated with the CTU or with all CTUs of the coding structure is enabled at slice level.

11. The method of one of claims 1 to 10, wherein the CTU in-loop filtering parameters associated with a CTU or with all CTUs of a coding structure are signaled per picture component.

12. The method of one of claims 1 to 11, wherein the CTU in-loop filtering parameters associated with a CTU or with all CTUs of a coding structure are signaled per filter type.

13. A method for encoding in a bitstream a video sequence comprising video pictures, each video picture being split into multiple coding tree units, denoted CTU, each CTU comprising CTU blocks, CTU coded blocks data being obtained for each CTU by encoding blocks of said CTU, reconstructed CTU blocks associated with a CTU being obtained by decoding CTU coded blocks data associated with said CTU, reconstructed CTU blocks associated with a CTU being filtered using in-loop filtering parameters associated with said CTU, denoted CTU in-loop filtering parameters, wherein the CTU coded blocks data and the CTU in-loop filtering parameters associated with a CTU are signaled according to a method according to one of the claims 1 to 12.

14. A method for decoding from a bitstream a video sequence comprising video pictures, each video picture being split into multiple coding tree units, denoted CTU, each CTU comprising CTU blocks, CTU coded blocks data being obtained for each CTU by parsing the bitstream, reconstructed CTU blocks associated with a CTU being obtained by decoding CTU coded blocks data associated with said CTU, reconstructed CTU blocks associated with a CTU being filtered using in-loop filtering parameters associated with said CTU, denoted CTU in-loop filtering parameters, wherein the CTU coded blocks data and the CTU in-loop filtering parameters associated with a CTU are signaled according to a method according to one of the claims 1 to 12.

15. A bitstream, formatted to include encoded video picture data and information data obtained from a method of claim 15.

16. An apparatus comprising means for performing one of the methods claimed in any one of claims 1 to 16.

17. A computer program product including instructions which, when the program is executed by one or more processors, causes the one or more processors to carry out a method claimed in any one of claims 1 to 16.

18. A non-transitory storage medium carrying instructions of program code for executing a method claimed in any one of claims 1 to 16.

**Fig. 1**

**Fig. 2**

**Fig. 3**

SBTV  SBTH  STTV  STTH

**Fig. 4**

**Fig. 5**

**Fig. 6**

710

720

730

740

## Fig. 7

810

820

830

840

## Fig. 8

| coding_tree_unit( ) { | Description |
|---|---|
| xCtb = CtbAddrX << CtbLog2SizeY | |
| yCtb = CtbAddrY << CtbLog2SizeY | |
| if( sh_sao_luma_used_flag \|\| sh_sao_chroma_used_flag ) | In-loop filter parameters syntax |
| sao( CtbAddrX, CtbAddrY ) | |
| if( sh_alf_enabled_flag ){ | |
| alf( CtbAddrX, CtbAddrY, Y) | |
| if( sh_alf_cb_enabled_flag ) { | |
| alf_ctb( CtbAddrX, CtbAddrY, Cb ) | |
| } | |
| if( sh_alf_cr_enabled_flag ) { | |
| alf_ctb( CtbAddrX, CtbAddrY, Cr ) | |
| } | |
| } | |
| alf_ctb_cc( CtbAddrX, CtbAddrY, Cr ) | |
| if( sh_slice_type = = I && sps_qtbtt_dual_tree_intra_flag ) | CTU parameters syntax |
| dual_tree_implicit_qt_split( xCtb, yCtb, CtbSizeY, 0 ) | |
| else | |
| coding_tree( xCtb, yCtb, CtbSizeY, CtbSizeY, 1, 1, 0, 0, 0, 0, 0, SINGLE_TREE, MODE_TYPE_ALL ) | |
| } | |

# Fig. 9

710

720

740

730

# Fig. 10

820

810

830

840

# Fig. 11

710

740

720

730

**Fig. 12**

**Fig. 13**

| coding_tree_unit( ) { | Descriptor |
|---|---|
|   xCtb = CtbAddrX  <<  CtbLog2SizeY | |
|   yCtb = CtbAddrY  <<  CtbLog2SizeY | |
|   if( sh_slice_type  = =  I  &&  sps_qtbtt_dual_tree_intra_flag ) | CTU |
|     dual_tree_implicit_qt_split( xCtb, yCtb, CtbSizeY, 0 ) | parameters |
|   else | syntax |
|     coding_tree( xCtb, yCtb, CtbSizeY, CtbSizeY, 1, 1, 0, 0, 0, 0, 0, <br>                SINGLE_TREE, MODE_TYPE_ALL ) | |
|   if( sh_sao_luma_used_flag || sh_sao_chroma_used_flag ) | In-loop    filter |
|     sao( CtbAddrX, CtbAddrY ) | parameters |
|   if( sh_alf_enabled_flag ){ | syntax |
|   alf( CtbAddrX, CtbAddrY, Y) | |
|     if( sh_alf_cb_enabled_flag ) { | |
|       alf_ctb( CtbAddrX, CtbAddrY, Cb ) | |
|       } | |
|     if( sh_alf_cr_enabled_flag ) { | |
|     alf_ctb( CtbAddrX, CtbAddrY, Cr ) | |
|       } | |
|     } | |
|   alf_ctb_cc( CtbAddrX, CtbAddrY, Cr ) | |
| } | |

# Fig. 14

| | |
|---|---|
| seq_parameter_set_rbsp( ) { | |
| ,,, | |
| // in-loop filters slice data reordering syntax | |
| sps_inloopFilterCtuReordering_enabled_flag | Whole sequence activation flag |
| if(sps_inloopFilterCtuReordering_enabled_flag) | |
| sps_inloopFilterCtuReordering_allowed_flag | Enable pps reordering adaption |
| ... | |
| } | |
| | |
| pic_parameter_set_rbsp( ) { | |
| ,,, | |
| if(sps_inloopFilterCtuReordering_allowed_flag) | |
| pps_inloopFilterCtuReordering_enable_flag | Picture activation flag |
| if (pps_inloopFilterCtuReordering_enable_flag) | |
| pps_inloopFilterCtuReordering_allowed_flag | Enable slice header adaptation |
| ,,, | |
| } | |
| | |
| picture_header_structure( ) { | |
| ,,, | |
| if(pps_inloopFilterCtuReordering_allowed_flag ) | |
| ph_inloopFilterCtuReordering_enable_flag | Slice header adaptation flag |
| ,,, | |
| } | |

# Fig. 15

700

710

740

Is last
CTU?

no

700

yes

720

730

Is last
CTU?

no

yes

**Fig. 16**

**Fig. 17**

```
slice_data( ) {
    // CTU parameters entropy
    coding_tree_slice_data()
    // in-loop filters parameters entropy
    loopfilter_slice_data()
}

coding_tree_slice_data( ) {
    // CTU parameters entropy decoding loop
    FirstCtbRowInSlice = 1
    for( i = 0; i < NumCtusInCurrSlice; i++ ) {
        CtbAddrInRs = CtbAddrInCurrSlice[ i ]
        CtbAddrX = ( CtbAddrInRs % PicWidthInCtbsY )
        CtbAddrY = ( CtbAddrInRs / PicWidthInCtbsY )
        if( CtbAddrX  = =  CtbToTileColBd[ CtbAddrX ] ) {
            NumHmvpCand = 0
            NumHmvpIbcCand = 0
            ResetIbcBuf = 1
        }
        coding_tree_unit( )
        if( i  = =  NumCtusInCurrSlice − 1 )
            end_of_slice_one_bit  /* equal to 1 */
        else if( CtbAddrX  = =  CtbToTileColBd[ CtbAddrX + 1 ] − 1 ) {
            if( CtbAddrY  = =  CtbToTileRowBd[ CtbAddrY + 1 ] − 1 ) {
                end_of_tile_one_bit  /* equal to 1 */
                byte_alignment( )
            } else if( sps_entropy_coding_sync_enabled_flag ) {
                end_of_subset_one_bit  /* equal to 1 */
                byte_alignment( )
            }
            FirstCtbRowInSlice = 0
        }
    }
}

.....
```

| ... |
|---|
| loopfilter_slice_data( ) { |
| // CTU parameters entropy decoding loop |
| FirstCtbRowInSlice = 1 |
| for( i = 0; i < NumCtusInCurrSlice; i++ ) { |
| CtbAddrInRs = CtbAddrInCurrSlice[ i ] |
| CtbAddrX = ( CtbAddrInRs % PicWidthInCtbsY ) |
| CtbAddrY = ( CtbAddrInRs / PicWidthInCtbsY ) |
| in-loopfilter_coding_tree_unit ( ) |
| if( i  = =  NumCtusInCurrSlice − 1 ) |
| end_of_slice_one_bit  /* equal to 1 */ |
| else if( CtbAddrX  = =  CtbToTileColBd[ CtbAddrX + 1 ] − 1 ) { |
| if( CtbAddrY  = =  CtbToTileRowBd[ CtbAddrY + 1 ] − 1 ) { |
| end_of_tile_one_bit  /* equal to 1 */ |
| byte_alignment( ) |
| } else if( sps_entropy_coding_sync_enabled_flag ) { |
| end_of_subset_one_bit  /* equal to 1 */ |
| byte_alignment( ) |
| } |
| FirstCtbRowInSlice = 0 |
| } |
| } |
| } |

# Fig. 18

| coding_tree_unit( ) { | Description |
|---|---|
| xCtb = CtbAddrX << CtbLog2SizeY | |
| yCtb = CtbAddrY << CtbLog2SizeY | |
| if( sh_slice_type  = =  I  &&  sps_qtbtt_dual_tree_intra_flag ) | CTU |
| dual_tree_implicit_qt_split( xCtb, yCtb, CtbSizeY, 0 ) | parameters |
| else | syntax |
| coding_tree( xCtb, yCtb, CtbSizeY, CtbSizeY, 1, 1, 0, 0, 0, 0, 0, SINGLE_TREE, MODE_TYPE_ALL ) | |
| } | |

# Fig. 19

| in-loopfilter_coding_tree_unit( ) { | Description |
|---|---|
|   xCtb = CtbAddrX << CtbLog2SizeY | |
|   yCtb = CtbAddrY << CtbLog2SizeY | |
|   if( sh_sao_luma_used_flag \|\| sh_sao_chroma_used_flag ) | In-loop   filter |
|     sao( CtbAddrX, CtbAddrY ) | parameters |
|   if( sh_alf_enabled_flag ){ | syntax |
|   alf( CtbAddrX, CtbAddrY, Y) | |
|     if( sh_alf_cb_enabled_flag ) { | |
|       alf_ctb( CtbAddrX, CtbAddrY, Cb ) | |
|     } | |
|     if( sh_alf_cr_enabled_flag ) { | |
|     alf_ctb( CtbAddrX, CtbAddrY, Cr ) | |
|     } | |
|   } | |
|   alf_ctb_cc( CtbAddrX, CtbAddrY, Cr ) | |
| } | |

# Fig. 20

| | |
|---|---|
| seq_parameter_set_rbsp( ) { | |
| ,,, | |
| // in-loop filters slice data reordering syntax | |
| sps_inloopFilterSdReordering_enabled_flag | Whole sequence activation flag |
| if (sps_inloopFilterSdReordering_enabled_flag) | |
| sps_inloopFilterSdReordering_allowed_flag | Enable pps reordering adaption |
| ... | |
| } | |
| | |
| pic_parameter_set_rbsp( ) { | |
| ,,, | |
| if(sps_inloopFilterSdReordering_allowed_flag ) | |
| pps_inloopFilterSdReordering_enable_flag | Picture activation flag |
| if (pps_inloopFilterSdReordering_enabled_flag) | |
| pps_inloopFilterSdReordering_allowed_flag | Enable slice header adaptation |
| ,,, | |
| } | |
| | |
| picture_header_structure( ) { | |
| ,,, | |
| if(pps_inloopFilterSdReordering_allowed_flag ) | |
| ph_inloopFilterSdReordering_enable_flag | Slice header adaptation flag |
| ,,, | |
| } | |

# Fig. 21

**Fig. 22**

Europäisches
Patentamt

European
Patent Office

Office européen
des brevets

# EUROPEAN SEARCH REPORT

**Application Number**

EP 22 30 7053

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/032747 A1 (FRAUNHOFER GES FORSCHUNG [DE]) 25 February 2021 (2021-02-25) * abstract; figures 1, 2, 5, 6a * * pages 1, 23-24 * * page 17, line 16 – line 23 * | 1-18 | INV. H04N19/70 |
| X | SUEHRING K ET AL: "Non-CE5/AHG17: Low-delay ALF syntax", 16. JVET MEETING; 20191001 – 20191011; GENEVA; (THE JOINT VIDEO EXPLORATION TEAM OF ISO/IEC JTC1/SC29/WG11 AND ITU-T SG.16 ), no. JVET-P0452 ; m50420 7 October 2019 (2019-10-07), XP030217352, Retrieved from the Internet: URL:http://phenix.int-evry.fr/jvet/doc_end _user/documents/16_Geneva/wg11/JVET-P0452- v2.zip JVET-P0452-v2.docx [retrieved on 2019-10-07] * abstract; figures 3, 4 * * Sections 2-6 * | 1-18 | |
| A,D | COBAN M ET AL: "Algorithm description of Enhanced Compression Model 6 (ECM 6)", 139. MPEG MEETING; 20220718 – 20220722; ONLINE; (MOTION PICTURE EXPERT GROUP OR ISO/IEC JTC1/SC29/WG11), no. m60618 ; JVET-AA2025 11 October 2022 (2022-10-11), XP030304402, Retrieved from the Internet: URL:https://dms.mpeg.expert/doc_end_user/d ocuments/139_Teleconference/wg11/m60618-JV ET-AA2025-v1-JVET-AA2025.zip JVET-AA2025-v1.docx [retrieved on 2022-10-11] * the whole document * | 1-18 | TECHNICAL FIELDS SEARCHED (IPC)<br><br>H04N |

The present search report has been drawn up for all claims

| Place of search | Date of completion of the search | Examiner |
|---|---|---|
| The Hague | 19 April 2023 | Streich, Sebastian |

EPO FORM 1503 03.82 (P04C01)

## ANNEX TO THE EUROPEAN SEARCH REPORT
## ON EUROPEAN PATENT APPLICATION NO.

EP 22 30 7053

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2023

| Patent document cited in search report | Publication date | Patent family member(s) | Publication date |
|---|---|---|---|
| WO 2021032747 A1 | 25-02-2021 | AU 2020332558 A1 | 10-03-2022 |
| | | BR 112022003176 A2 | 17-05-2022 |
| | | CA 3151829 A1 | 25-02-2021 |
| | | CN 114556925 A | 27-05-2022 |
| | | IL 290601 A | 01-04-2022 |
| | | JP 2022545236 A | 26-10-2022 |
| | | KR 20220046679 A | 14-04-2022 |
| | | TW 202114429 A | 01-04-2021 |
| | | US 2022303582 A1 | 22-09-2022 |
| | | WO 2021032747 A1 | 25-02-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- ISO/IEC 23008-2 High Efficiency Video Coding. *ITU-T Recommendation H.265, https://www.itu.int/rec/T-REC-H.265-202108-P/en*
- Versatile Video Coding. *ITU-T H.266 | ISO/IEC 23090-3,* 2020
- **M. COBAN ; F. LE L6ANNEC ; K. NASER ; J. STRÖM ; L. ZHANG.** Algorithm description of Enhanced Compression Model 6 (ECM 6. *JVET-AA2025,* October 2022
- ISO/IEC 14496-10 Advanced Video Coding for generic audio-visual services. *ITU-T Recommendation H.264, https://www.itu.int/rec/T-REC-H.264-202108-P/en*
- ISO/IEC 23090-3 Versatile Video Coding. *ITU-T Recommendation H.266, https://www.itu.int/rec/T-REC-H.266-202008-I/en*